(19) Europäisches Patentamt
European Patent Office
Office européen des brevets

(11) **EP 4 625 953 A1**

(12) **EUROPEAN PATENT APPLICATION**
published in accordance with Art. 153(4) EPC

(43) Date of publication:
**01.10.2025 Bulletin 2025/40**

(21) Application number: **24855708.4**

(22) Date of filing: **15.08.2024**

(51) International Patent Classification (IPC):
**H04M 1/19** *(2006.01)*

(52) Cooperative Patent Classification (CPC):
**H04M 1/19**

(86) International application number:
**PCT/CN2024/112405**

(87) International publication number:
**WO 2025/039983 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.08.2023 CN 202311050596**

(71) Applicant: **Huawei Technologies Co., Ltd.
Shenzhen, Guangdong 518129 (CN)**

(72) Inventors:
• **SHI, Liming
Shenzhen, Guangdong 518129 (CN)**

• **PING, Guoli
Shenzhen, Guangdong 518129 (CN)**
• **WENG, Jingkai
Shenzhen, Guangdong 518129 (CN)**
• **SHEN, Hao
Shenzhen, Guangdong 518129 (CN)**
• **LIU, Li
Shenzhen, Guangdong 518129 (CN)**
• **QIN, Renxuan
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **ELECTRONIC DEVICE AND RELATED SOUND LEAKAGE PREVENTION METHOD**

(57) Embodiments of this application disclose an electronic device and a related sound leakage prevention method. The electronic device includes an audio processing unit, a first-type array element, and a second-type array element. The audio processing unit is configured to: receive an initial audio signal, and determine a first-type audio signal and a second-type audio signal based on the initial audio signal, where the first-type audio signal includes M first audio signals, and the second-type audio signal includes N second audio signals; and send the first-type audio signal to the first-type array element, and send the second-type audio signal to the second-type array element. The first-type array element is configured to output M first sound wave signals based on the corresponding first audio signals. The second-type array element is configured to output N second sound wave signals based on the corresponding second audio signals. The N second sound wave signals are used for superimposition and cancellation with the M first sound wave signals at a plurality of location points in a first preset area. According to embodiments of this application, a private call can be implemented when an electronic device is used for a call, thereby improving user experience.

FIG. 9

EP 4 625 953 A1

## Description

This application claims priority to Chinese Patent Application No. 202311050596.1, filed with the China National Intellectual Property Administration on August 18, 2023 and entitled "ELECTRONIC DEVICE AND RELATED SOUND LEAKAGE PREVENTION METHOD", which is incorporated herein by reference in its entirety.

## TECHNICAL FIELD

This application relates to the field of intelligent terminal technologies, and in particular, to an electronic device and a related sound leakage prevention method.

## BACKGROUND

With the popularity of bezel-less mobile phones, a position of a receiver of a mobile phone has to be moved to the top of a screen. This causes a problem of severer sound leakage during a handheld call. An effective sound leakage prevention solution for a mobile phone call can enable a user to make a private call without using a headset, so as to implement a full-private call in a handheld state. Currently, there are a plurality of technical solutions that can reduce sound leakage of the mobile phone, but effects of reducing sound leakage by using these technical solutions are not significant. Therefore, how to improve a sound leakage prevention effect for a call is a current and future research direction.

## SUMMARY

Embodiments of this application provide an electronic device and a related sound leakage prevention method, to ensure that a private call can be implemented when an electronic device is used for a call, thereby improving user experience.

According to a first aspect, an embodiment of this application provides an electronic device. The electronic device includes an audio processing unit, a first-type array element, and a second-type array element, the first-type array element includes M first array elements, the second-type array element includes N second array elements, and M and N are integers greater than 0. The audio processing unit is configured to: receive an initial audio signal, and determine a first-type audio signal and a second-type audio signal based on the initial audio signal, where the first-type audio signal includes M first audio signals, and the second-type audio signal includes N second audio signals; and send the first-type audio signal to the first-type array element, and send the second-type audio signal to the second-type array element, where one audio signal corresponds to one array element. The M first array elements in the first-type array element are configured to output M first sound wave signals based on the corresponding first audio signals. The N second array elements in the second-type array element are configured to output N second sound wave signals based on the corresponding second audio signals. The N second sound wave signals are used for superimposition and cancellation with the M first sound wave signals at a plurality of location points in a first preset area.

In this embodiment of this application, a plurality of array elements may be configured on the electronic device, and the plurality of array elements may include the first-type array element and the second-type array element. In a call process, the audio processing unit may process the to-be-played initial audio signal to obtain the M first audio signals and the N second audio signals, respectively send the M first audio signals to the corresponding first array elements, and respectively send the N second audio signals to the corresponding second array elements. Further, the first array elements and the second array elements may simultaneously output different sound wave signals based on the received audio signals, so that the N second sound wave signals output by the N second-type array elements are superimposed and cancelled with a leaked sound of the first-type array elements at a plurality of location points in a sound leakage prevention area (that is, a surrounding area of the electronic device). In this way, an audio leakage effect in the sound leakage prevention area is reduced, thereby implementing a private call, and improving user experience.

In some embodiments, the electronic device further includes M first filters, and the audio processing unit is further configured to perform first filtering processing on the initial audio signal by using each first filter to obtain the M first audio signals, where the M first audio signals are used to cancel, at a plurality of location points in a second preset area, interference of the N second sound wave signals on the M first sound wave signals, and the first filtering processing includes performing amplitude adjustment processing and/or phase adjustment processing on the initial audio signal.

In this embodiment of this application, an input of the first filter may be the initial audio signal, and an output may be the first audio signal. If M is an integer greater than 1, that is, the electronic device includes a plurality of first filters, preset amplitude adjustment and phase adjustment parameters corresponding to the first filters may be different. The first filter may perform amplitude adjustment and/or phase adjustment processing on the received initial audio signal based on preset amplitude adjustment and phase adjustment parameters, to obtain the first audio signal. The first array element does not directly output the initial audio signal, but outputs the processed audio signal, to cancel, at a plurality of location points in an audio playing area, interference caused by a sound wave output by the second-type array element on a sound wave output by the first-type array element, so that an audio reception effect in the audio playing area remains unchanged, thereby improving user experience.

In some embodiments, the first preset area is a sound leakage prevention area, and the second preset area is an audio playing area.

In some embodiments, the electronic device further includes N second filters, and the audio processing unit is further configured to perform second filtering processing on the initial audio signal by using each second filter to obtain the N second audio signals, where the second filtering processing includes performing amplitude adjustment processing and/or phase adjustment processing on the initial audio signal.

In this embodiment of this application, different second filters may be corresponding to different preset amplitude adjustment and phase adjustment parameters, an input of the second filter may be the initial audio signal, and an output may be the second audio signal. The second filters may process the initial audio signal based on preset amplitude adjustment and phase adjustment parameters corresponding to the second filters, to obtain the N second audio signals. Further, the second-type array elements may separately output the second audio signals for superimposition and cancellation with a leaked sound of the first-type array elements at a plurality of location points in a sound leakage prevention area (that is, a surrounding area), so that an audio leakage effect in the sound leakage prevention area is reduced, thereby implementing a private call, and improving user experience.

In some embodiments, the electronic device includes Q array elements, Q is greater than or equal to M+N, and the audio processing unit is further configured to: obtain decision information, where the decision information includes one or more of a current quantity of persons in the first preset area, a current remaining battery level of the electronic device, or a current location of the electronic device; and determine the M first array elements in the first-type array element and the N second array elements in the second-type array element from the Q array elements based on the decision information.

In this embodiment of this application, the electronic device may obtain the decision information by using the audio processing unit. The decision information may include but is not limited to information such as the quantity of persons in the first preset area, the current remaining battery level of the electronic device, and the current location of the electronic device. Further, the electronic device may determine the M first array elements in the first-type array element and the N second array elements in the second-type array element from the Q array elements based on the decision information, so that different array elements can be selected for working in different application scenarios, thereby improving system performance.

In some embodiments, if the current quantity of persons in the first preset area is larger, a value of N is larger; or if the current remaining battery level of the electronic device is lower, a value of N is smaller; or if the current location of the electronic device is in a private area, a value of N is smaller.

In this embodiment of this application, if the quantity of persons in the first preset area is larger, to ensure that a person in the first preset area cannot clearly hear a sound emitted by the electronic device, a quantity of second-type array elements may be appropriately increased, to obtain better quiet call quality. Alternatively, when the remaining battery level of the electronic device is lower, a quantity of second-type array elements may be appropriately reduced, to reduce power consumption of the electronic device. Alternatively, when the current location of the electronic device is in the private area of the user, for example, at home, and the user has a relatively low requirement on quiet call quality, a quantity of second-type array elements may be appropriately reduced, to reduce power consumption of the electronic device.

In some embodiments, distances between the N second array elements in the second-type array element and the M first array elements in the first-type array element fall within a first range.

In this embodiment of this application, a shorter distance between the N second array elements and the M first array elements, that is, a shorter distance between each of the N second array elements and each of the M first array elements, indicates a better sound leakage prevention effect, thereby improving user experience.

In some embodiments, the electronic device further includes M+N power amplifier circuits, one power amplifier circuit corresponds to one audio signal, and the audio processing unit is further configured to respectively amplify the M first audio signals and the N second audio signals by using the M+N power amplifier circuits, to obtain M processed first audio signals and N processed second audio signals; the M first array elements in the first-type array element are specifically configured to output the M first sound wave signals based on the processed first-type audio signals; and the second-type array element is specifically configured to output the N second sound wave signals based on the processed second-type audio signals.

In this embodiment of this application, after the M first filters and the N second filters separately perform amplitude adjustment processing and/or phase adjustment processing on the initial audio signal, the M first audio signals and the N second audio signals may be obtained, and then the M first audio signals and the N second audio signals may be separately input to corresponding power amplifier circuits for processing, to amplify the audio signals, and drive the array elements to emit sounds, so that the user can hear a clearer sound, thereby improving user experience.

According to a second aspect, an embodiment of this application provides a sound leakage prevention method, applied to an electronic device. The electronic device includes a display, an audio processing unit, a first-type array element, and a second-type array element, the first-type array element includes M first array elements, the second-type array element includes N second array elements, and M and N are integers greater than 0. The method includes: when the electronic device is in a call, displaying a first interface on the display; receiving and responding to a preset operation of a user on a preset area in the first interface, and displaying a second interface; and receiving and responding to a touch operation on a first control in the second interface; receiving an initial audio signal through the audio processing unit, and determining a first-type audio signal and a second-type audio signal based on the initial audio signal, where the first-type audio signal includes M first audio signals, and the second-type audio signal includes N second audio signals; and sending the first-type audio signal to the first-type array element, and sending the second-type audio signal to the second-type array element, where one audio signal corresponds to one array element; outputting M first sound wave signals through the M first array elements in the first-type array element based on the corresponding first audio signals; and outputting N second sound wave signals through the N second array elements in the second-type array element based on the corresponding second audio signals, where the N second sound wave signals are used for superimposition and cancellation with the M first sound wave signals at a plurality of location points in a first preset area.

According to a third aspect, an embodiment of this application provides a sound leakage prevention method, applied to an electronic device. The electronic device includes an audio processing unit, a first-type array element, and a second-type array element, the first-type array element includes M first array elements, the second-type array element includes N second array elements, and M and N are integers greater than 0. The method includes: receiving an initial audio signal through the audio processing unit, and determining a first-type audio signal and a second-type audio signal based on the initial audio signal, where the first-type audio signal includes M first audio signals, and the second-type audio signal includes N second audio signals; and sending the first-type audio signal to the first-type array element, and sending the second-type audio signal to the second-type array element, where one audio signal corresponds to one array element; outputting M first sound wave signals through the M first array elements in the first-type array element based on the corresponding first audio signals; and outputting N second sound wave signals through the N second array elements in the second-type array element based on the corresponding second audio signals, where the N second sound wave signals are used for superimposition and cancellation with the M first sound wave signals at a plurality of location points in a first preset area.

In some embodiments, the electronic device further includes M first filters, and the method further includes: performing first filtering processing on the initial audio signal by using each first filter to obtain the M first audio signals, where the M first audio signals are used to cancel, at a plurality of location points in a second preset area, interference of the N second sound wave signals on the M first sound wave signals, and the first filtering processing includes performing amplitude adjustment processing and/or phase adjustment processing on the initial audio signal.

In some embodiments, the first preset area is a sound leakage prevention area, and the second preset area is an audio playing area.

In some embodiments, the electronic device further includes N second filters, and the method further includes: performing second filtering processing on the initial audio signal by using each second filter to obtain the N second audio signals, where the second filtering processing includes performing amplitude adjustment processing and/or phase adjustment processing on the initial audio signal.

In some embodiments, distances between the N second array elements in the second-type array element and the M first array elements in the first-type array element fall within a first range.

In some embodiments, the electronic device includes Q array elements, Q is greater than or equal to M+N, and the method further includes: obtaining decision information, where the decision information includes one or more of a current quantity of persons in the first preset area, a current remaining battery level of the electronic device, or a current location of the electronic device; and determining the M first array elements in the first-type array element and the N second array elements in the second-type array element from the Q array elements based on the decision information.

In some embodiments, if the current quantity of persons in the first preset area is larger, a value of N is larger; or if the current remaining battery level of the electronic device is lower, a value of N is smaller; or if the current location of the electronic device is in a private area, a value of N is smaller.

In some embodiments, the electronic device further includes M+N power amplifier circuits, one power amplifier circuit corresponds to one audio signal, and the method further includes: respectively amplifying the M first audio signals and the N second audio signals by using the M+N power amplifier circuits, to obtain M processed first audio signals and N processed second audio signals; the M first array elements in the first-type array element are specifically configured to output the M first sound wave signals based on the processed first-type audio signals; and the second-type array element is specifically configured to output the N second sound wave signals based on the processed second-type audio signals.

According to a fourth aspect, an electronic device is provided, including a memory and one or more processors. The memory is coupled to the one or more processors, the memory is configured to store computer program code, the computer program code includes computer instructions, and the one or more processors invoke the computer instructions, so that the electronic device performs the method according to any one of the second aspect or the implementations of the second aspect, or the method according to any one of the third aspect or the implementations of the third aspect.

According to a fifth aspect, a computer-readable storage medium is provided, including instructions. When the instructions are run on an electronic device, the electronic device is enabled to perform the method according to any one of the second aspect or the implementations of the second aspect, or the method according to any one of the third aspect or the implementations of the third aspect.

According to a sixth aspect, a computer program product is provided. When the computer program product runs on a computer, the computer is enabled to perform the method according to any one of the second aspect or the implementations of the second aspect, or the method according to any one of the third aspect or the implementations of the third aspect.

According to a seventh aspect, a chip system is provided. The chip system includes at least one processor, configured to implement the method according to any one of the second aspect or the implementations of the second aspect, or the method according to any one of the third aspect or the implementations of the third aspect.

**BRIEF DESCRIPTION OF DRAWINGS**

FIG. 1 is a diagram of a structure of an electronic device according to an embodiment of this application;
FIG. 2 is a diagram of a software structure of an electronic device according to an embodiment of this application;
FIG. 3a(a) to FIG. 3e are diagrams of a group of user interfaces according to an embodiment of this application;
FIG. 4 is a diagram of a structure of a smartphone according to an embodiment of this application;
FIG. 5 is a diagram of a structure of a smart head-mounted device according to an embodiment of this application;
FIG. 6 is a diagram of a call scenario according to an embodiment of this application;
FIG. 7 is a diagram of an array element according to an embodiment of this application;
FIG. 8 is a diagram of another array element according to an embodiment of this application;
FIG. 9 is a diagram of a structure of an electronic device according to an embodiment of this application;
FIG. 10 is a diagram of a filter according to an embodiment of this application;
FIG. 11 is a diagram of another filter according to an embodiment of this application;
FIG. 12 is a diagram of a sound leakage prevention effect according to an embodiment of this application;
FIG. 13 is a diagram of a power amplifier circuit according to an embodiment of this application;
FIG. 14 is a flowchart of a method for determining a filter parameter corresponding to each array element according to an embodiment of this application;
FIG. 15 is a diagram of audio sampling according to an embodiment of this application;
FIG. 16(a) and FIG. 16(b) are a diagram of frequency response curves in a human ear area and a surrounding area according to an embodiment of this application;
FIG. 17 is a schematic flowchart of a sound leakage prevention method according to an embodiment of this application; and
FIG. 18 is a schematic flowchart of another sound leakage prevention method according to an embodiment of this application.

**DESCRIPTION OF EMBODIMENTS**

The following describes embodiments of this application with reference to the accompanying drawings in embodiments of this application.

In the specification, claims, and accompanying drawings of this application, the terms "first", "second", "third", "fourth" and so on are intended to distinguish between different objects but do not indicate a particular order. In addition, the terms "include" and "have" and any variations thereof are intended to cover non-exclusive inclusion. For example, a process, method, system, product, or device that includes a series of steps or units is not limited to the listed steps or units, but optionally further includes an unlisted step or unit, or optionally further includes another inherent step or unit for the process, method, product, or device.

The "embodiment" mentioned in this specification means that specific features, structures, or characteristics described with reference to the embodiment may be included in at least one embodiment of this application. Appearance of the phrase at various locations in the specification does not necessarily refer to a same embodiment, or an independent or alternative embodiment mutually exclusive with another embodiment. A person skilled in the art may explicitly and implicitly understand that the embodiments described in this specification may be combined with other embodiments.

Embodiments of this application provide an electronic device and a related sound leakage prevention method. The electronic device may include but is not limited to a smartphone, a tablet computer (tablet personal computer, Tablet PC), a wearable electronic device (such as smart glasses), a smart head-mounted device (such as VR glasses), or the like.

When a conventional electronic device (for example, a smartphone) is in a call, the electronic device is near a human ear, and only a screen speaker makes a sound. Therefore, volume of the outside can be reduced only by reducing volume of the electronic device. However, this also reduces volume of a sound heard by the human ear, and a user cannot hear the sound clearly. In this application, a plurality of array elements (for example, a plurality of speakers or a plurality of sound output holes) may be configured on an electronic device, and filters respectively corresponding to different array elements may be calculated by using a preset algorithm. Further, after the filters are used in a multi-array-element system, a sound field formed by superimposing sound waves output by the plurality of speakers near a human ear is the same as a sound field formed when a screen speaker makes a sound independently. This ensures that volume and sound quality of a sound heard by the human ear remain unchanged, and sound waves in a surrounding area are cancelled after being superimposed, thereby reducing sound leakage of the electronic device. In conclusion, in this application, it can be ensured that sound quality and volume of a sound heard by a user remain unchanged, and volume of sound leakage of an electronic device can be greatly reduced.

Before the method provided in embodiments of this application is described in detail, the electronic device provided in embodiments of this application is first described.

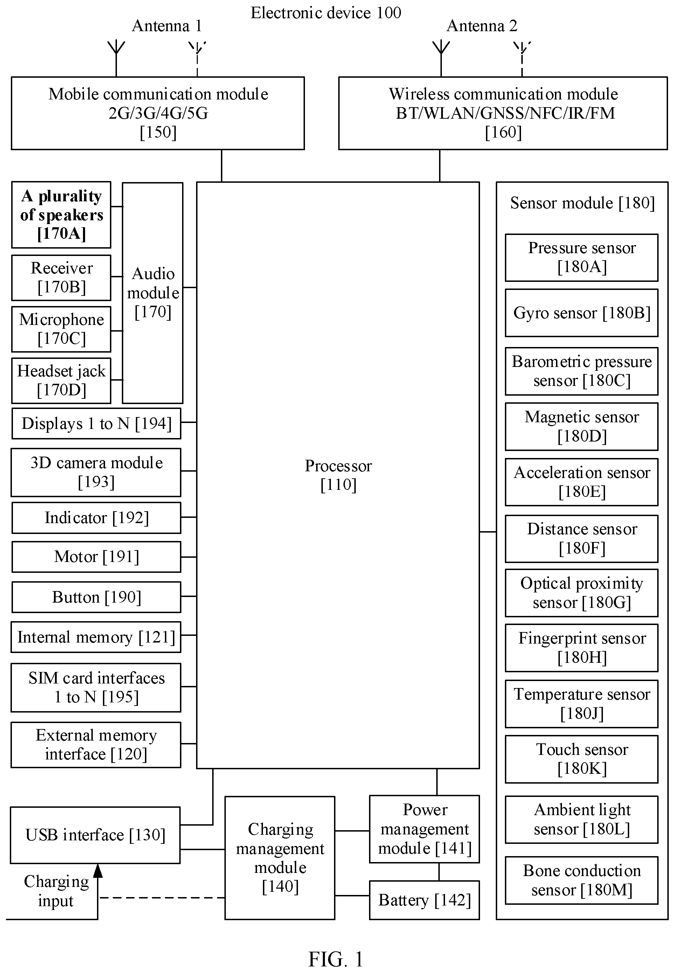

FIG. 1 is a diagram of a structure of an electronic device 100.

The following specifically describes the embodiments by using the electronic device 100 as an example. It should be understood that the electronic device 100 may have more or fewer components than those shown in the figure, may combine two or more components, or may have different component configurations. The components shown in the figure may be implemented in hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a plurality of speakers 170A, a receiver 170B, a microphone 170C, a headset jack 170D, a sensor module 180, a button 190, a motor 191, an indicator 192, a 3D camera module 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

A wireless communication function of the electronic device 100 may be implemented by using the antenna 1, the antenna 2, the mobile communication module 150, the wireless communication module 160, the modem processor, the baseband processor, and the like.

The electronic device 100 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the electronic device 100 may include one or N displays 194, where N is a positive integer greater than 1.

The electronic device 100 may implement an audio function, such as calling, music playing, and recording, by using the audio module 170, the plurality of speakers 170A, the receiver 170B, the microphone 170C, the headset jack 170D, the application processor, and the like.

The audio module 170 is configured to convert digital audio information into an analog audio signal for output, and is also configured to convert analog audio input into a digital audio signal.

The plurality of speakers 170A, also referred to as "loudspeakers", are configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

A software system of the electronic device 100 may use a layered architecture, an eventdriven architecture, a microkernel architecture, a micro-service architecture, or a cloud architecture. In embodiments of the present invention, an Android system of a layered architecture is used as an example to illustrate the software structure of the electronic device 100.

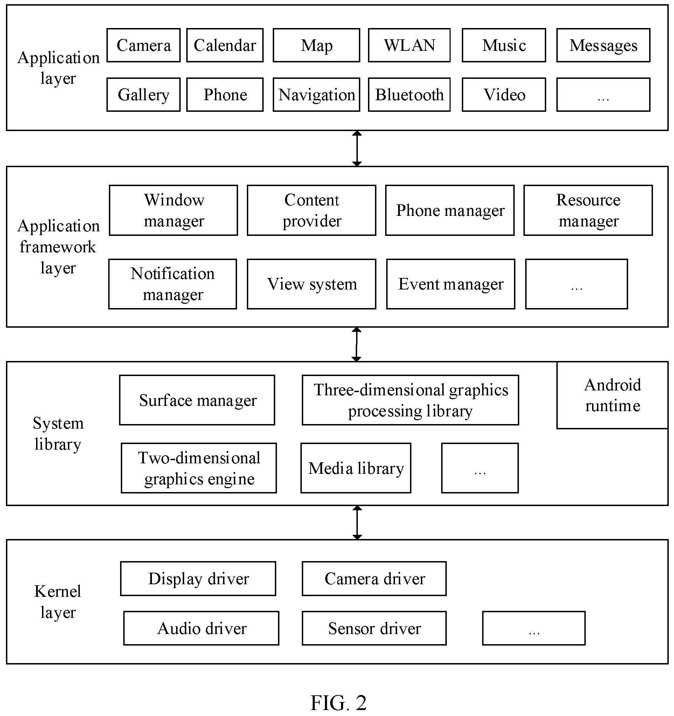

FIG. 2 is a block diagram of a software structure of the electronic device 100 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include application programs (which may also be referred to as applications) such as Phone, Camera, Gallery, Calendar, Map, Navigation, WLAN, Bluetooth, Music, Video, and Messages.

The application framework layer provides an application programming interface (application programming interface, API) and a programming framework for applications at the application layer. The application framework layer includes some predefined functions.

As shown in FIG. 2, the application framework layer may include a phone manager, a window manager, a content provider, a view system, a resource manager, a notification manager, and the like.

The phone manager is configured to provide a communication function of the electronic device 100, for example, call status management (including accepting and declining).

The window manager is configured to manage window programs. The window manager may obtain a display size, determine whether there is a status bar, lock a screen, take a screenshot, and the like.

The content provider is configured to store and obtain data and make the data accessible to the application. The data may include videos, images, audio, calls that are made and received, browsing history and bookmarks, a phone book, and the like.

The view system includes visual controls, such as a text display control and a picture display control. The view system may be configured to construct an application. A display interface may include one or more views. For example, a display interface including an SMS notification icon may include a text display view and a picture display view.

The resource manager provides various resources for the application, such as a localized string, an icon, a picture, a layout file, and a video file.

The notification manager enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog interface on a screen. For example, the status bar shows text information, an alert tone is made, the electronic device vibrates, or an indicator blinks.

The Android runtime includes a core library and a virtual machine. The Android runtime is responsible for scheduling and management of the Android system.

The core library includes two parts: a function that needs to be invoked by using the Java language, and a core library of Android.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

**The following describes user interfaces provided in embodiments of this application.**

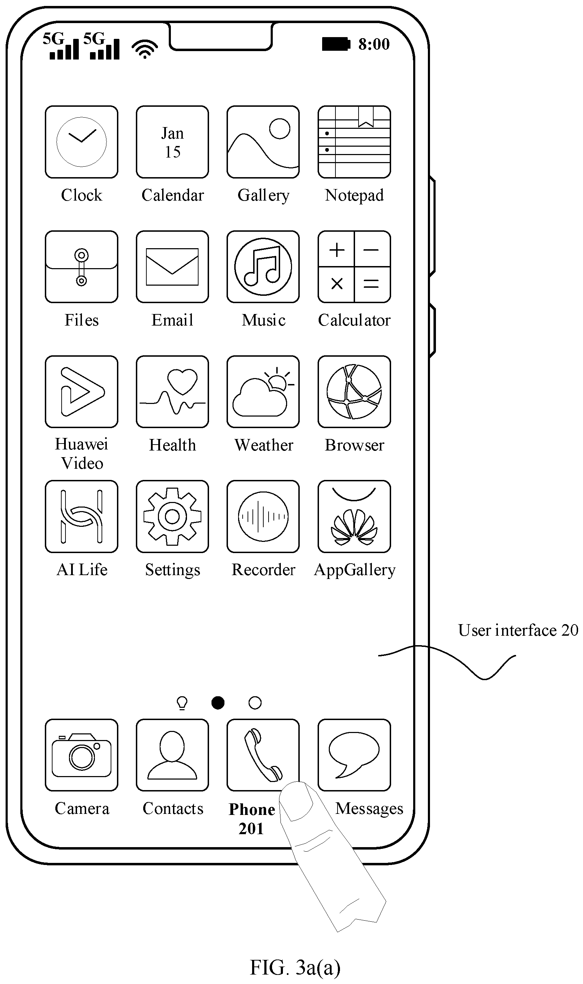

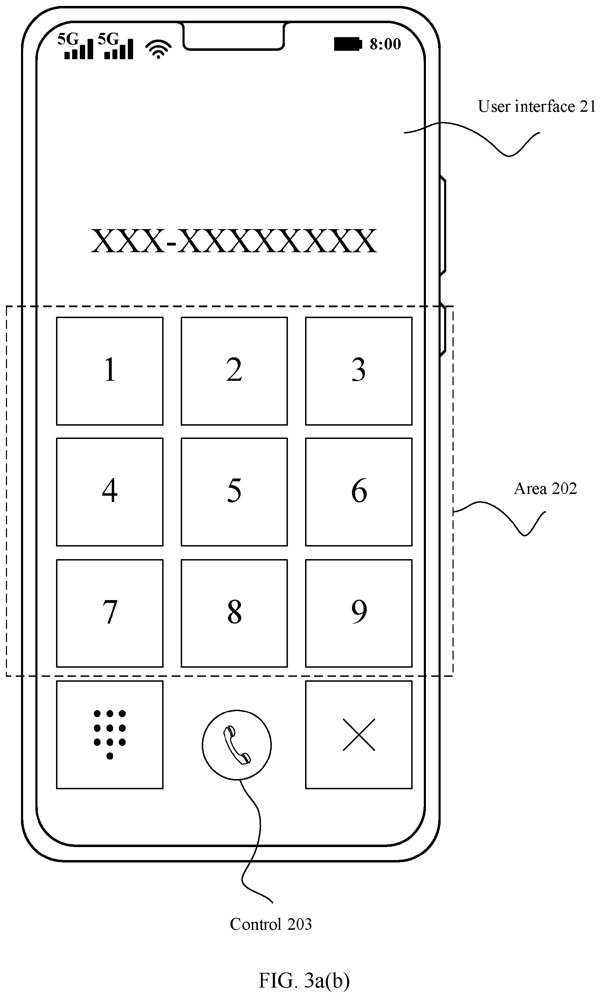

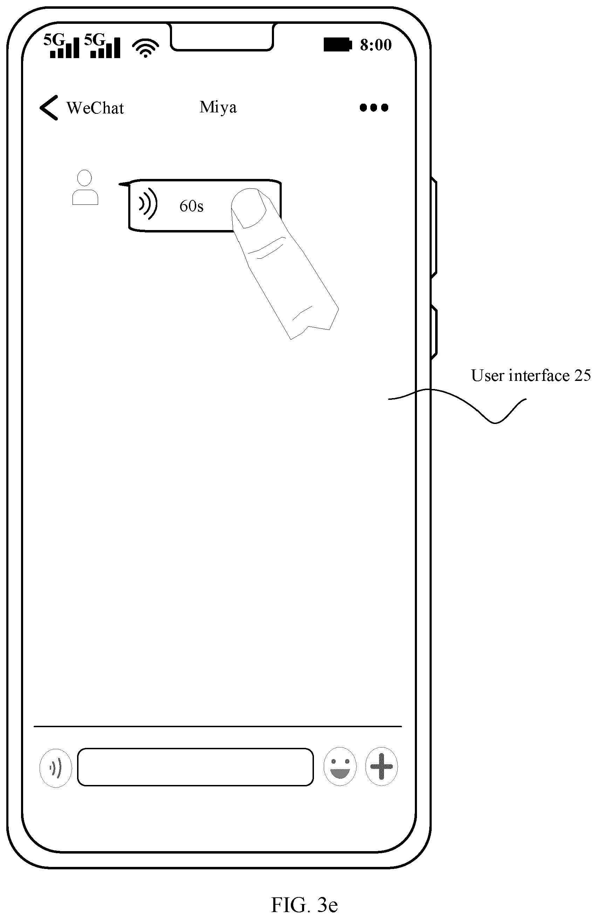

FIG. 3a(a) to FIG. 3e show a group of user interfaces displayed on the electronic device 100 according to an embodiment of this application.

FIG. 3a(a) shows an example user interface 20 that is on the electronic device 100 and that is used to display an installed application.

As shown in FIG. 3a(a), the user interface 20 displays icons of one or more installed applications. For example, the user interface 20 may display Phone 201, Camera, Gallery, Clock, Calendar, Notepad, Files, Email, Music, Calculator, Huawei Video, Health, Weather, Browser, AI Life, Settings, Recorder, and the like.

As shown in FIG. 3a(a), the electronic device 100 may receive and respond to a touch operation of a user on an icon of Phone 201 in the user interface 20 (that is, an operation of starting a call application), start the call application, and display, on the display 194 of the electronic device 100, a user interface 21 shown in FIG. 3a(b). The user interface 21 may be a dialing interface, and the user interface 21 may include an area 202 and a control 203. The area 202 may be used to display a plurality of digital controls, so that the user enters a phone number. The control 203 may be used to dial the phone number entered by the user.

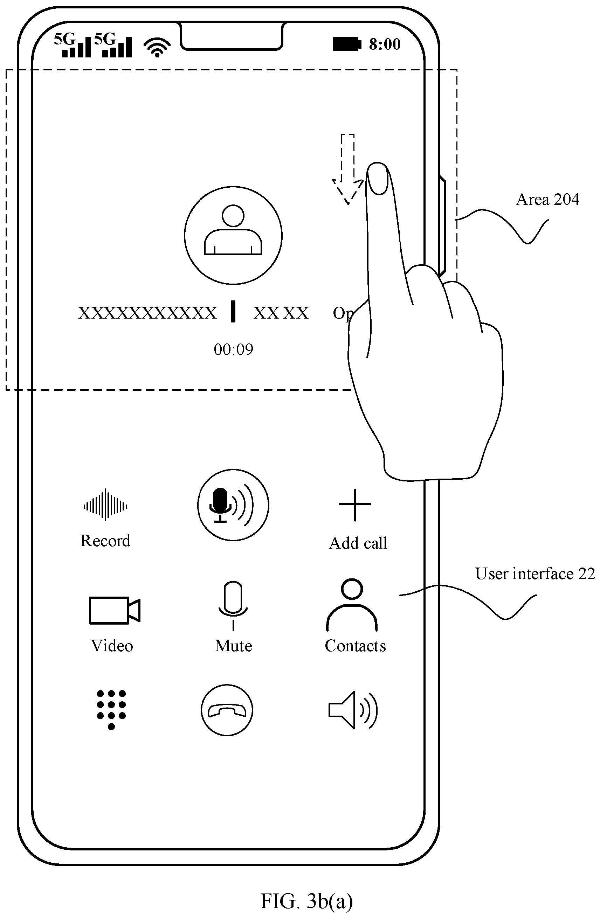

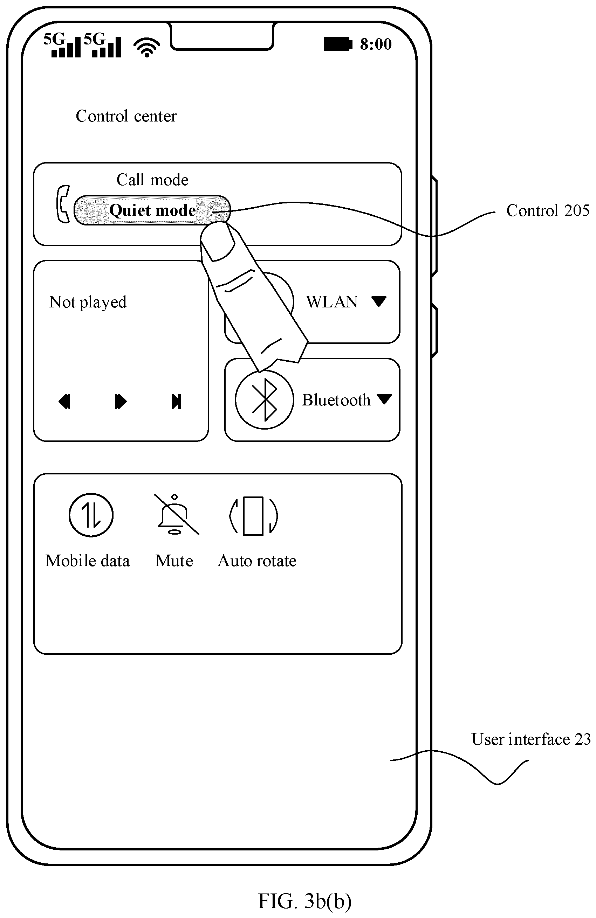

As shown in FIG. 3a(b), the electronic device 100 may receive and respond to an operation of entering a phone number by the user in the area 202 in the user interface 21, and display, in the user interface 21, the phone number entered by the user. The electronic device 100 may further receive and respond to a touch operation of the user on the control 203 in the user interface 21, dial the phone number entered by the user, and display, on the display 194 of the electronic device 100, a user interface 22 shown in FIG. 3b(a). The user interface 22 may be a call screen, and the user interface 22 may include an area 204.

Optionally, as shown in FIG. 3a(b), the electronic device 100 may receive and respond to an operation of entering a phone number by the user in the area 202 in the user interface 21, and display, in the user interface 21, the phone number entered by the user. The electronic device 100 may further receive and respond to a touch operation of the user on the control 203 in the user interface 21, dial the phone number entered by the user, and automatically enable a quiet mode. After the quiet mode is enabled, during a call, only the user can hear a sound emitted by a speaker, and a person around cannot clearly hear the sound emitted by the speaker. This ensures that a private call can be implemented when the user uses the electronic device 100 for a call, thereby improving user experience. In some embodiments, the quiet mode may also be referred to as a quiet call mode, a silent call mode, a sound leakage prevention call mode, or a private call mode.

As shown in FIG. 3b(a), the electronic device 100 may receive and respond to a preset operation of the user in the area 204 in the user interface 22, for example, a downward slide operation of the user in the area 204, start a control center of the electronic device 100, and display, on the display 194 of the electronic device 100, a user interface 23 shown in FIG. 3b(b). The user interface 23 may be a control center interface, and the user interface 23 may include a control 205. The control 205 may be used to enable the quiet mode during a call.

As shown in FIG. 3b(b), the electronic device 100 may also receive and respond to a touch operation of the user on the control 205 in the user interface 23, and enable the quiet mode. After the quiet mode is enabled, during a call, only the user can hear a sound emitted by a speaker, and a person around cannot clearly hear the sound emitted by the speaker. This ensures that a private call can be implemented when the user uses the electronic device 100 for a call, thereby improving user experience. How the electronic device 100 implements the quiet mode is subsequently described in detail, and details are not first described herein.

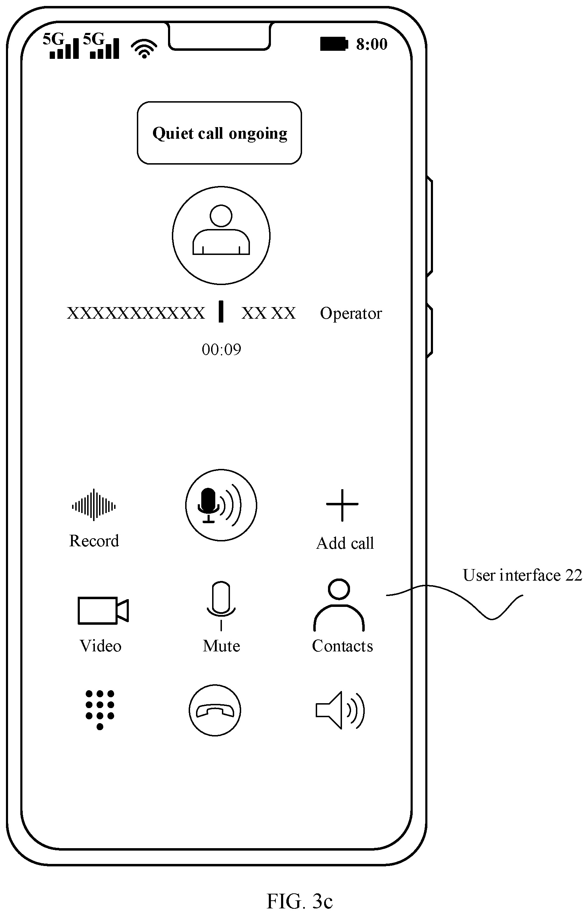

As shown in FIG. 3c, if the user enables the quiet mode during a call, a prompt of "in quiet mode" may be displayed on the user interface 22, to prompt the user that the quiet mode is currently enabled. During a call, only the user can hear a sound emitted by a speaker, and a person around cannot clearly hear the sound emitted by the speaker. This ensures that a private call can be implemented when the user uses the electronic device 100 for a call, thereby improving user experience.

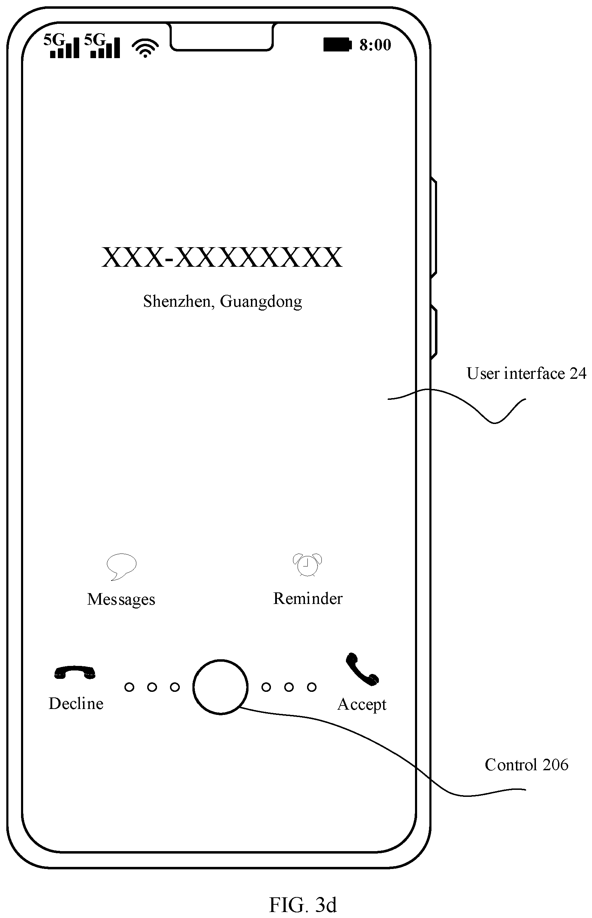

As shown in FIG. 3d, when the electronic device 100 is called and rings, the electronic device 100 may display a user interface 24 on the display 194. The user interface 24 may be a caller ID interface, and the user interface 24 may include a control 206. The electronic device 100 may receive and respond to an operation of dragging the control 206 and sliding rightward by the user, answer the call, and display, on the display 194 of the electronic device 100, the user interface 22 shown in FIG. 3b(a). In some embodiments, the electronic device 100 may receive and respond to a preset operation of the user in the area 204 in the user interface 22, for example, a downward slide operation of the user in the area 204, start a control center of the electronic device 100, and display, on the display 194 of the electronic device 100, a user interface 23 shown in FIG. 3b(b). Further, as shown in FIG. 3b(b), the electronic device 100 may receive and respond to a touch operation of the user on the control 205 in the user interface 23, and enable the quiet mode. In some embodiments, the electronic device 100 may receive and respond to an operation of dragging the control 206 and sliding rightward by the user, answer a call, and automatically enable the quiet mode.

As shown in FIG. 3e, after the electronic device 100 enters chat software (for example, WeChat) and starts a chat dialog box, the electronic device 100 may display a user interface 25 on the display 194. The user interface 25 may be a chat dialog box interface, and the user interface 25 may include a voice message sent by a chat partner. The electronic device 100 may receive and respond to an operation of tapping the voice message by the user, enable the quiet mode, and play the voice message, so that in a process of playing the voice by the user, only the user can hear a sound emitted by a speaker, and a person around cannot clearly hear the sound emitted by the speaker. This ensures that private playing can be implemented when the user plays the voice message by using the electronic device 100, thereby improving user experience.

**The following describes an electronic device in embodiments of this application.**

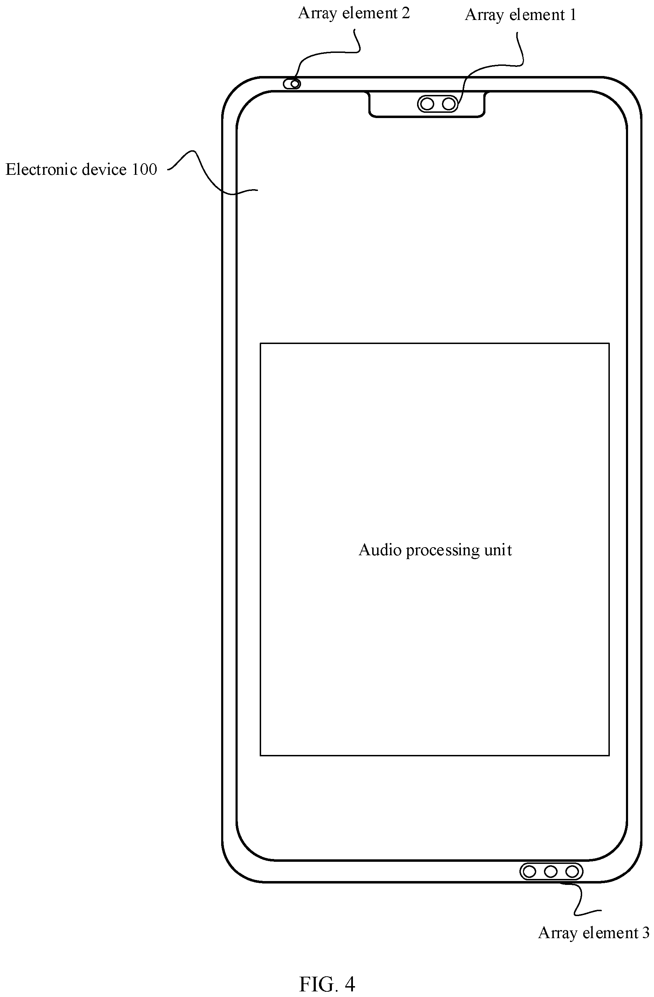

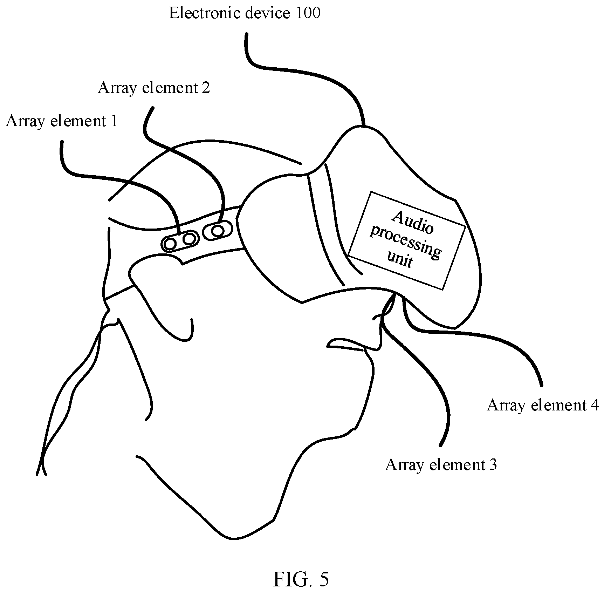

Refer to FIG. 4. In FIG. 4, it is assumed that the electronic device 100 is a smartphone, Q array elements and an audio processing unit may be disposed on the smartphone, and Q is an integer greater than or equal to 2. FIG. 4 shows only three array elements: an array element 1, an array element 2, and an array element 3. The audio processing unit in FIG. 4 may include the audio module 170 in FIG. 1, or may include the processor 110. It should be noted that the array element may be understood as a speaker or a sound output hole. Refer to FIG. 5. In FIG. 5, it is assumed that the electronic device 100 is a smart head-mounted device (for example, VR glasses), Q array elements and an audio processing unit may also be disposed on the smart head-mounted device, and Q is an integer greater than or equal to 2. FIG. 5 shows only four array elements: an array element 1, an array element 2, an array element 3, and an array element 4. The audio processing unit in FIG. 5 may include the audio module 170 in FIG. 1, or may include the processor 110. It may be understood that the electronic device 100 in this application may include but is not limited to the two types of electronic devices provided in FIG. 4 and FIG. 5 as examples. For ease of description, the following uses an example in which the electronic device 100 is a smartphone for description. Detailed descriptions of the electronic device 100 are as follows:

In some embodiments, after dialing a phone number entered by a user, the electronic device 100 automatically enables a quiet mode. After the quiet mode is enabled, during a call, only the user can hear a sound emitted by a speaker, and a person around cannot clearly hear the sound emitted by the speaker. This ensures that a private call can be implemented when the user uses the electronic device 100 for a call, thereby improving user experience. For detailed descriptions, refer to the related descriptions of FIG. 3a(b). Details are not described herein again.

In some embodiments, the electronic device 100 may alternatively receive and respond to an operation of a user and enable a quiet mode during a call. For detailed descriptions, refer to the related descriptions of FIG. 3b(b). Details are not described herein again.

In some embodiments, when the electronic device 100 is called and rings, a quiet mode may be automatically enabled after the electronic device 100 answers the call. Alternatively, the electronic device 100 may receive a user operation and enable a quiet mode during a call. For detailed descriptions, refer to the related descriptions of FIG. 3d. Details are not described herein again.

In some embodiments, the electronic device 100 may enable a quiet mode when playing a voice message. For detailed descriptions, refer to the related descriptions of FIG. 3e. Details are not described herein again.

The following describes, with reference to the accompanying drawings, how the electronic device 100 enables the quiet mode, so that during a call, only the user can hear a sound emitted by an array element (for example, a speaker), and a surrounding person cannot clearly hear the sound emitted by the array element. Detailed descriptions are as follows.

In some embodiments, the electronic device 100 may obtain decision information through the audio processing unit, where the decision information includes one or more of a current quantity of persons in a first preset area, a current remaining battery level of the electronic device 100, and a current location of the electronic device 100; and determine, based on the decision information, M first array elements in a first-type array element and N second array elements in a second-type array element from the Q array elements, where M and N are integers greater than 0.

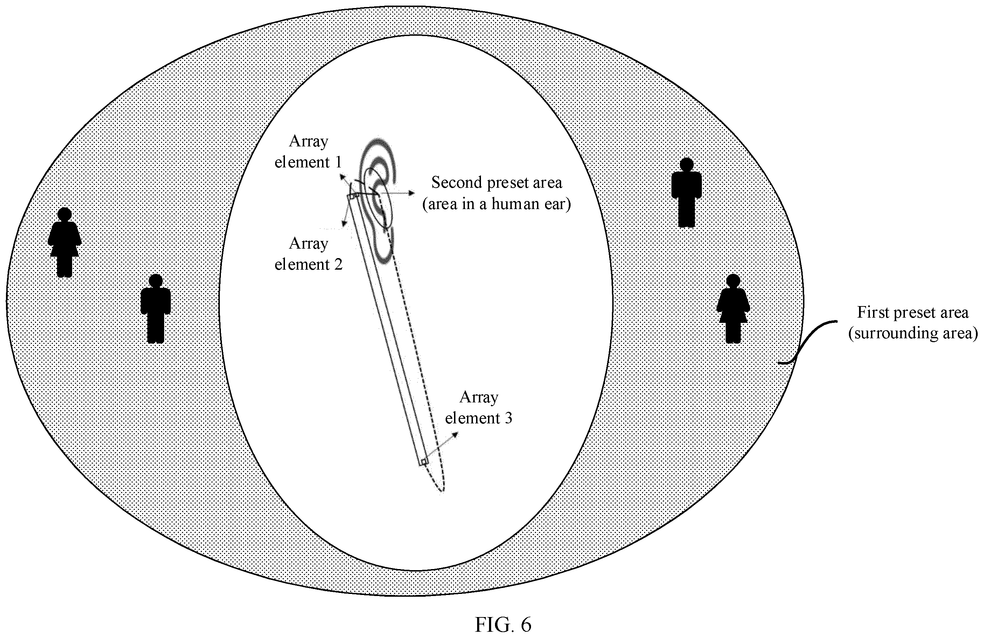

Specifically, as shown in FIG. 6, when the user holds the electronic device 100 to make a call or listen to a voice, the first preset area may be understood as a sound leakage prevention area (that is, a surrounding area). For example, space within a shoulder width of 1 m of the user is referred to as a personal area, and space outside the personal area may be referred to as a surrounding area. An objective of this application is to minimize volume of a sound leaked to the surrounding area (that is, the first preset area). The second preset area may be understood as an audio playing area (that is, an area in a human ear), for example, space between a human ear profile and the electronic device 100. The first preset area is larger than the second preset area. After the electronic device 100 enables the quiet mode, the electronic device 100 may obtain the decision information by using the audio processing unit. The decision information may include but is not limited to the quantity of persons in the first preset area, the current remaining battery level of the electronic device 100, and the current location of the electronic device 100. Further, the electronic device 100 may determine the M first array elements in the first-type array element and the N second array elements in the second-type array element from the Q array elements based on the decision information.

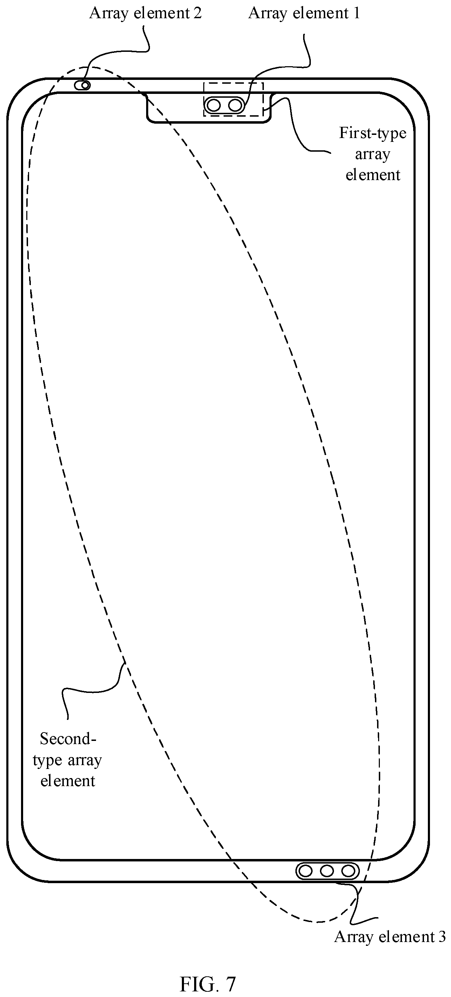

For example, the decision information is that the quantity of persons in the first preset area is 4, and the current remaining battery level of the electronic device 100 is relatively high. As shown in FIG. 7, the electronic device 100 may determine, based on the decision information, that the first-type array element includes one array element, which is an array element 1, where the array element 1 may be a screen speaker; and the second-type array element includes two array elements, which are respectively an array element 2 and an array element 3. The current remaining battery level of the electronic device 100 is relatively high, and there are a relatively large quantity of persons in the first preset area. In this scenario, the user may appropriately increase a quantity of second-type array elements, to improve quiet call quality when the electronic device is used for a call, thereby improving user experience.

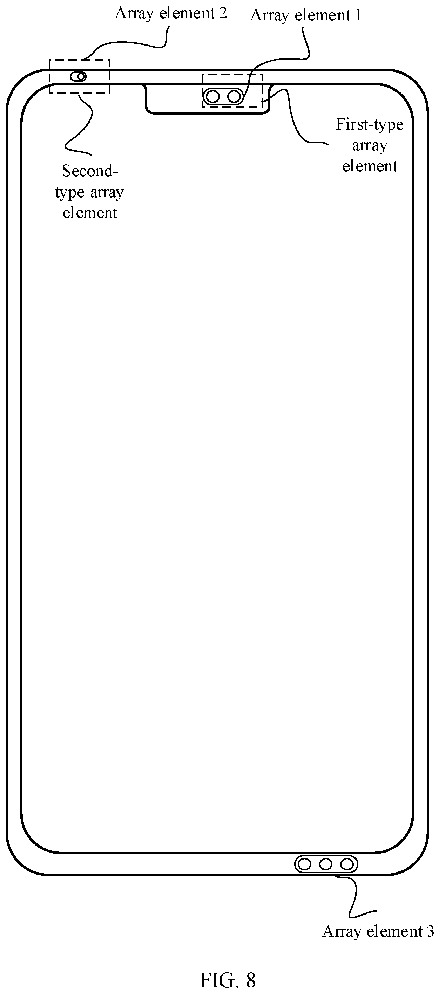

For another example, the decision information is that the quantity of persons in the first preset area is 1, and the current remaining battery level of the electronic device 100 is relatively low. As shown in FIG. 8, the electronic device 100 may determine, based on the decision information, that the first-type array element includes one array element, which is an array element 1, where the array element 1 may be a screen speaker; and the second-type array element includes one array element, which is an array element 2. Because there is a relatively small quantity of persons in the first preset area, and the current battery level of the electronic device 100 is relatively low, a quantity of second-type array elements may be appropriately reduced, to ensure that power consumption can be reduced while the user makes a quiet call, thereby improving system performance.

In some embodiments, if the current quantity of persons in the first preset area is larger, a value of N is larger; or if the current remaining battery level of the electronic device is lower, a value of N is smaller; or if the current location of the electronic device is in a private area, a value of N is smaller.

Specifically, as shown in FIG. 6, if the quantity of persons in the first preset area is larger, to ensure that a person in the first preset area cannot clearly hear a sound emitted by the electronic device 100, a quantity of second-type array elements may be appropriately increased, to obtain better quiet call quality. Alternatively, when the remaining battery level of the electronic device 100 is lower, a quantity of second-type array elements may be appropriately reduced, to reduce power consumption of the electronic device 100. Alternatively, when the current location of the electronic device 100 is in the private area of the user, for example, at home, and the user has a relatively low requirement on quiet call quality, a quantity of second-type array elements may be appropriately reduced, to reduce power consumption of the electronic device 100.

In some embodiments, distances between the N second array elements in the second-type array element and the M first array elements in the first-type array element fall within a first range. Specifically, the first range may be 1 millimeter to 10 centimeters. A shorter distance between the N second array elements and the M first array elements, that is, a shorter distance between each of the N second array elements and each of the M first array elements, indicates a better sound leakage prevention effect, thereby improving user experience.

The audio processing unit is configured to receive an initial audio signal, and determine a first-type audio signal and a second-type audio signal based on the initial audio signal.

Specifically, the first-type audio signal includes M first audio signals, and the second-type audio signal includes N second audio signals. When the electronic device 100 is in a call, the audio processing unit of the electronic device 100 may receive the initial audio signal by using an antenna. Next, the audio processing unit may divide the initial audio signal into M+N channels of signals, and all channels of signals are the same, that is, have the same frequency, the same phase, and the same amplitude. Further, the audio processing unit may obtain the M first audio signals and the N second audio signals based on the M+N channels of signals.

In some embodiments, the audio processing unit is specifically configured to: divide the initial audio signal into M channels of signals, and determine the M channels of signals as the M first audio signals. Specifically, after receiving the initial audio signal through the audio processing unit and determining the first-type array element, the electronic device 100 may divide the initial audio signal into the M channels of signals, and use the M channels of signals as the M first audio signals, so that after the first-type array element makes a sound subsequently, the user can clearly hear call content (that is, call content corresponding to the initial audio signal) in the audio playing area.

In some embodiments, the electronic device 100 further includes M first filters, and the audio processing unit is specifically configured to perform first filtering processing on the initial audio signal by using each first filter to obtain the M first audio signals, where the M first audio signals are used to cancel, at a plurality of location points in a second preset area, interference of the N second sound wave signals on the M first sound wave signals, the first filtering processing includes performing amplitude adjustment processing and/or phase adjustment processing on the initial audio signal, and an audio reception effect of a processed initial audio signal in the second preset area remains unchanged.

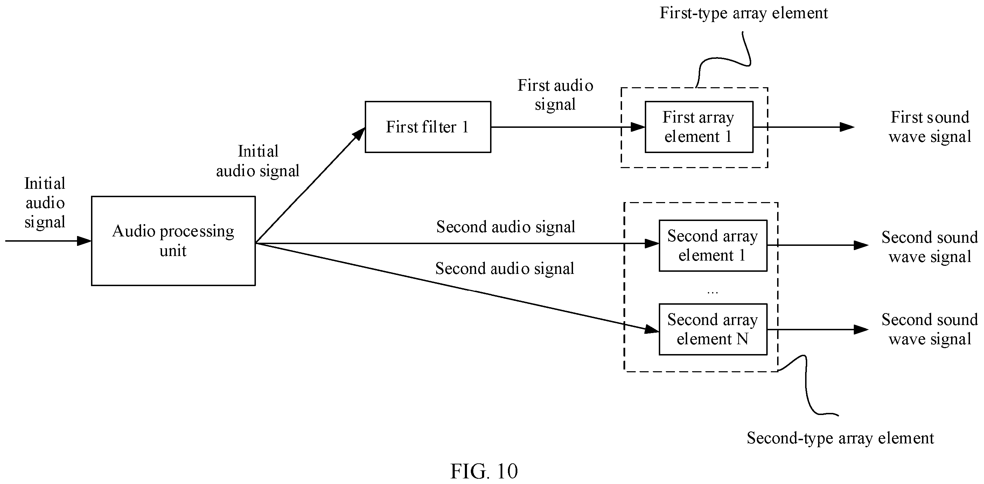

Specifically, as shown in FIG. 10, it is assumed that M is 1. The electronic device 100 includes one first filter, which is a first filter 1. The first filter 1 corresponds to a preset amplitude adjustment and phase adjustment parameter. An input of the first filter 1 may be the initial audio signal, and an output may be a first audio signal. If M is an integer greater than 1, that is, the electronic device 100 includes a plurality of first filters, preset amplitude adjustment and phase adjustment parameters corresponding to the first filters may be different. The first filter 1 may perform amplitude adjustment and/or phase adjustment processing on the received initial audio signal based on preset amplitude adjustment and phase adjustment parameters, to obtain the first audio signal. The first array element 1 does not directly output the initial audio signal, but outputs the processed audio signal, to cancel, at a plurality of location points in an audio playing area, interference caused by a sound wave output by the second-type array element on a sound wave output by the first-type array element, so that an audio reception effect in the audio playing area remains unchanged, thereby improving user experience.

In some embodiments, the electronic device 100 further includes N second filters, and the audio processing unit is specifically configured to perform second filtering processing on the initial audio signal by using each second filter to obtain the N second audio signals, where the second filtering processing includes performing amplitude adjustment processing and/or phase adjustment processing on the initial audio signal, and an audio leakage effect of a processed initial audio signal in the first preset area is reduced.

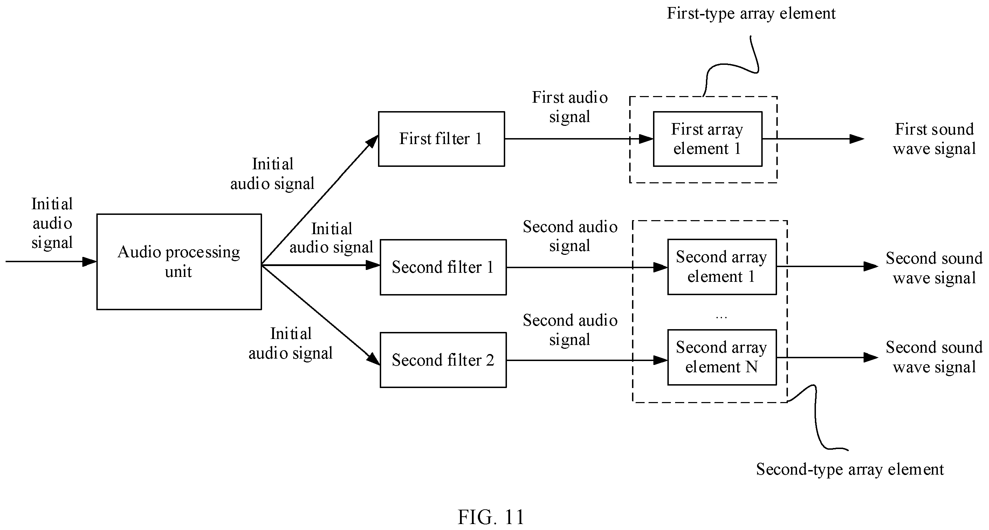

Specifically, as shown in FIG. 11, it is assumed that N is 2. The electronic device 100 includes two second filters: a second filter 1 and a second filter 2. The second filter 1 and the second filter 2 respectively correspond to different preset amplitude adjustment and phase adjustment parameters. Inputs of both the second filter 1 and the second filter 2 may be the initial audio signal, and outputs may be second audio signals. The second filter 1 and the second filter 2 may process the initial audio signal based on preset amplitude adjustment and phase adjustment parameters corresponding to the second filters, to respectively obtain two second audio signals. Further, the second-type array elements may separately output the second audio signals for superimposition and cancellation with a leaked sound of the first-type array elements at a plurality of location points in a sound leakage prevention area (that is, a surrounding area), so that an audio leakage effect in the sound leakage prevention area is reduced, thereby implementing a private call, and improving user experience.

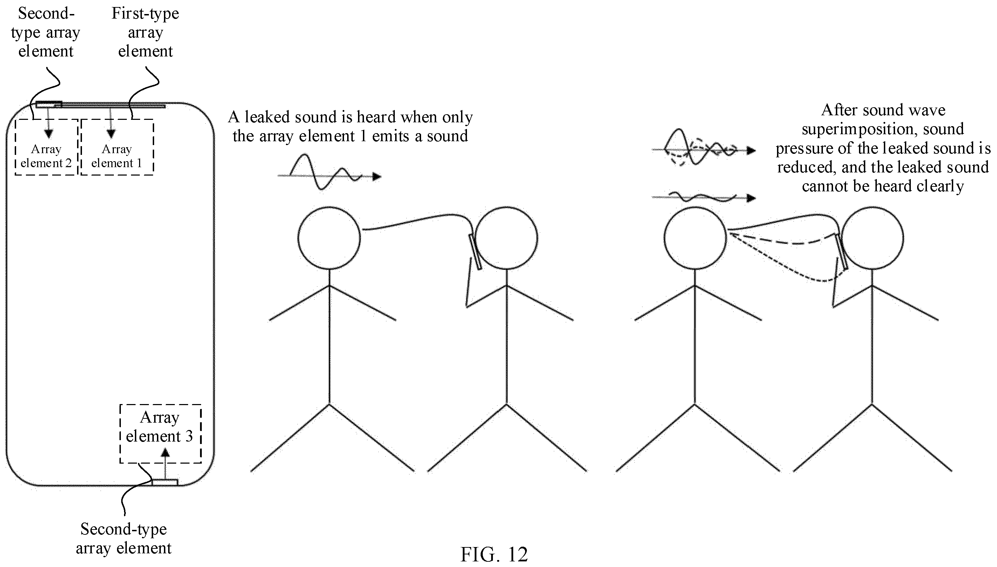

For example, as shown in FIG. 12, if the second-type array element does not make a sound, and only the first-type array element, for example, the array element 1, makes a sound, another person in an area around the user may hear a leaked sound of the array element 1, and call privacy cannot be ensured. However, in this application, the second-type array element and the first-type array element are introduced to make sounds at the same time. A sound wave output by the second-type array element and a sound wave output by the first-type array element are superimposed and cancelled at a plurality of location points in the area around the user. In this way, a sound leakage sound pressure of the first-type array element in the area around the user is reduced, and another person in the area around the user cannot clearly hear the sound emitted by the first-type array element, thereby implementing a full-private call and improving user experience.

The audio processing unit is further configured to send the first-type audio signal to the first-type array element, and send the second-type audio signal to the second-type array element.

Specifically, after the audio processing unit determines the first-type audio signal and the second-type audio signal based on the initial audio signal, the audio processing unit further sends the first-type audio signal to the first-type array element, and sends the second-type audio signal to the second-type array element, where one audio signal corresponds to one array element.

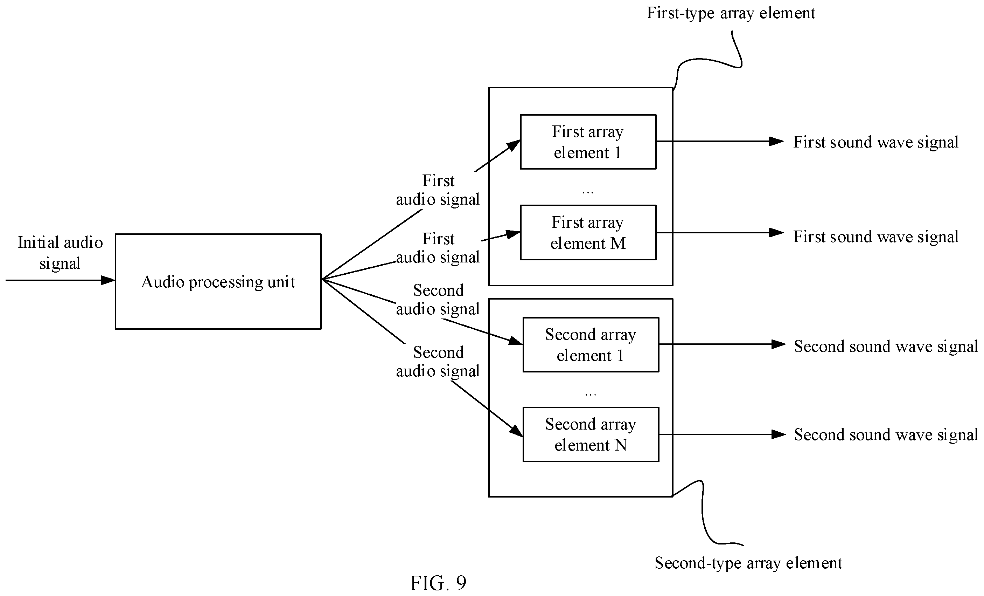

For example, as shown in FIG. 9, the audio processing unit may separately send the M first audio signals in the obtained first-type audio signal to corresponding first array elements. In addition, the audio processing unit may also separately send the N second audio signals in the obtained second-type audio signal to corresponding second array elements, so that the first-type array element and the second-type array element can simultaneously make sounds subsequently. A sound wave output by the second-type array element and a sound wave output by the first-type array element are superimposed and cancelled at a plurality of location points in the area around the user. In this way, a sound leakage sound pressure of the first-type array element in the area around the user is reduced, and another person in the area around the user cannot clearly hear the sound emitted by the first-type array element, thereby implementing a full-private call and improving user experience.

The M first array elements in the first-type array element are configured to output M first sound wave signals based on the corresponding first audio signals.

Specifically, after receiving the first audio signal, each first array element in the first-type array element may convert the audio signal into a sound wave signal and output the sound wave signal, so that the user can clearly clear call content (that is, call content corresponding to the initial audio signal) in the audio playing area. In addition, if the first-type array element does not directly output the initial audio signal, but outputs the processed audio signal, interference caused by a sound wave output by the second-type array element on a sound wave output by the first-type array element can be cancelled at a plurality of location points in the audio playing area, so that an audio reception effect in the audio playing area remains unchanged, thereby improving user experience.

The N second array elements in the second-type array element are configured to output N second sound wave signals based on the corresponding second audio signals.

Specifically, after receiving a second audio signal, each second array element in the second-type array element may convert the audio signal into a sound wave signal and output the sound wave signal together with the sound wave signal of the first-type array element, so that the sound wave output by the second-type array element can be superimposed and cancelled with a leaked sound of the first-type array element at a plurality of location points in the sound leakage prevention area (that is, the surrounding area). In this way, an audio leakage effect in the sound leakage prevention area is reduced, that is, a sound leakage pressure of the first-type array element in the area around the user is reduced, and another person in the surrounding area cannot clearly hear a sound emitted by the first-type array element, thereby implementing a full-private call and improving user experience.

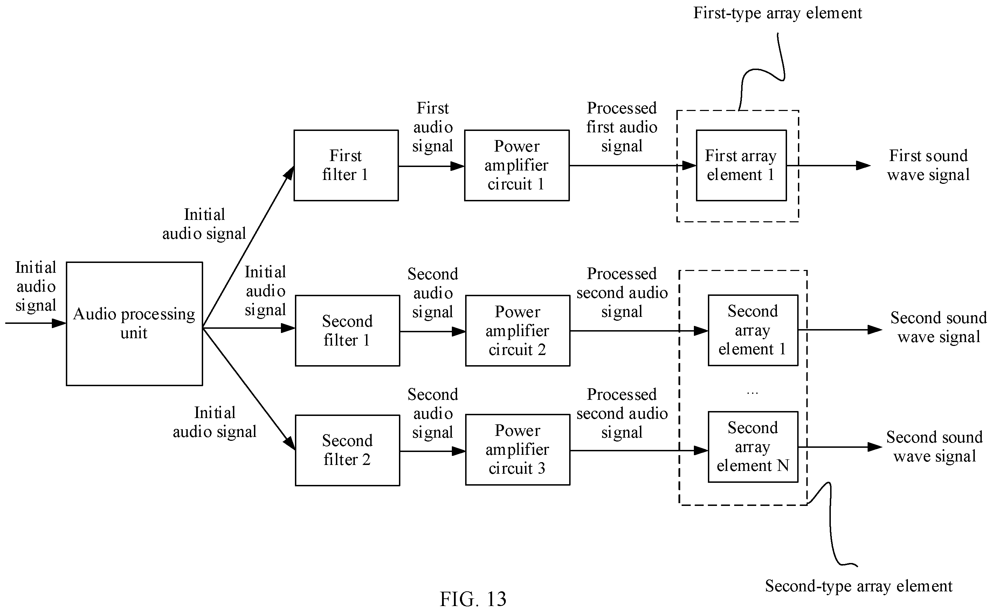

In some embodiments, as shown in FIG. 13, the electronic device 100 further includes M+N power amplifier circuits, one power amplifier circuit corresponds to one audio signal, and the audio processing unit is further configured to respectively amplify the M first audio signals and the N second audio signals by using the M+N power amplifier circuits, to obtain M processed first audio signals and N processed second audio signals; the M first array elements in the first-type array element are specifically configured to output the M first sound wave signals based on the processed first-type audio signals; and the second-type array element is specifically configured to output the N second sound wave signals based on the processed second-type audio signals.

Specifically, after the M first filters and the N second filters separately perform amplitude adjustment processing and/or phase adjustment processing on the initial audio signal, the M first audio signals and the N second audio signals may be obtained, and then the M first audio signals and the N second audio signals may be separately input to corresponding power amplifier circuits for processing, to amplify the audio signals, and drive the array elements to emit sounds, so that the user can hear a clearer sound, thereby improving user experience.

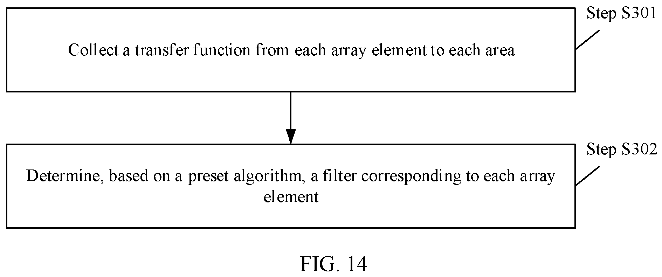

The following describes, with reference to FIG. 14, a method for determining a filter parameter corresponding to each array element according to an embodiment of this application.

Step S301: Collect a transfer function from each array element to each area.

Specifically, a first preset area (a surrounding area) and a second preset area (an audio playing area) may be first determined, a plurality of first sampling points are determined from the first preset area, and a plurality of second sampling points are determined from the second preset area. Further, the electronic device 100 may play a same frequency sweep signal by using all of a plurality of array elements, and collect, at each sampling point, a sound wave signal output by each array element, to obtain a transfer function from each array element to each sampling point.

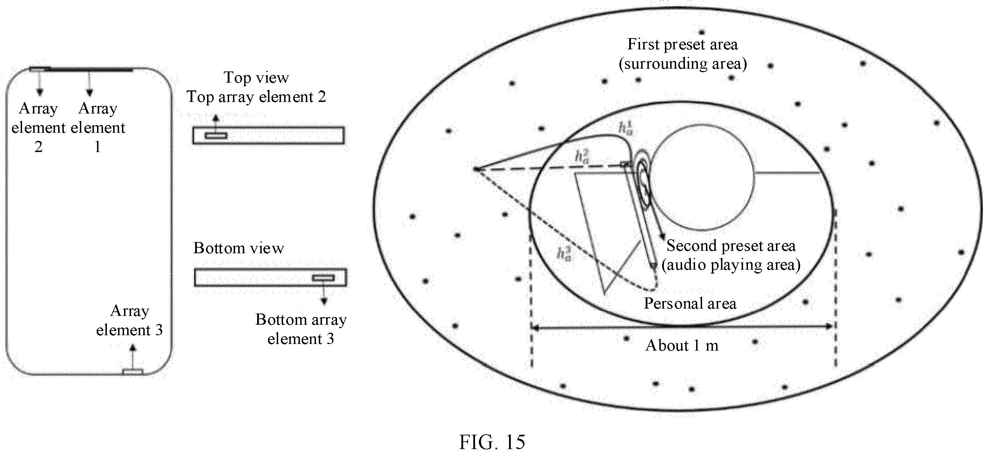

For example, as shown in FIG. 15, a target sampling point a is one of the plurality of first sampling points, and three array elements: an array element 1, an array element 2, and an array element 3, are disposed on the electronic device 100. The array element 1 is a first-type array element, and the array element 2 and the array element 3 are second-type array elements. The electronic device 100 plays the frequency sweep signal by using the array element 1, and collects, at the target sampling point a, a sound wave signal output by the array element 1, to obtain $H_a^1$ (that is, a transfer function of the array element 1 at the target sampling point a); the electronic device 100 plays the frequency sweep signal by using the array element 2, and collects, at the target sampling point a, a sound wave signal output by the array element 2, to obtain $H_a^2$ (that is, a transfer function of the array element 2 at the target sampling point a); and the electronic device 100 plays the frequency sweep signal by using the array element 3, and collects, at the target sampling point a, a sound wave signal output by the array element 3, to obtain $H_a^3$ (that is, a transfer function of the array element 3 at the target sampling point a). By analogy, the transfer function from each array element to each sampling point may be obtained. It should be noted that transfer functions respectively corresponding to the plurality of first sampling points may be represented by $H_m^n$, and transfer functions respectively corresponding to the plurality of second sampling points may be represented by $H'^n_m$.

Step S302: Determine, based on a preset algorithm, a filter corresponding to each array element.

Specifically, based on the foregoing obtained transfer function data, a filter parameter corresponding to each array element may be calculated by using a preset algorithm (for example, a neural network algorithm).

For example, in a scenario in which the electronic device 100 includes three array elements, to ensure that sound waves generated by the array elements can be superimposed and cancelled in the first preset area (that is, the surrounding area), filter parameters (that is, the foregoing preset amplitude adjustment and phase adjustment parameters) corresponding to the array element 2 and the array element 3 may be determined based on the transfer functions respectively corresponding to the plurality of first sampling points. It is assumed that the plurality of first sampling points include four points a, b, c, and d, and the transfer functions respectively corresponding to the first sampling points are $H_a\{H_a^1, H_a^2, H_a^3\}$, $H_b\{H_b^1, H_b^2, H_b^3\}$, $H_c\{H_c^1, H_c^2, H_c^3\}$, and $H_d\{H_d^1, H_d^2, H_d^3\}$. A filter parameter w2 corresponding to the array element 2 and a filter parameter w3 corresponding to the array element 3 may be separately determined based on Formula 1.

$$H_i^1 + \text{w2}H_i^2 + \text{w3}H_i^3 \approx 0 \quad (\text{Formula 1})$$

i may be a, b, c, and d separately. w2 and w3 may be comprehensively calculated by separately substituting the transfer functions into Formula 1. Because a plurality of first collection points in the first preset area are considered when w2 and w3 are calculated, it can be ensured that when any audio signal is processed based on w2 and w3, superimposition and cancellation between a sound wave signal output by the second-type array element and a sound wave signal output by the first-type array element can be implemented at a plurality of location points in the first preset area, thereby implementing a full-private call and improving user experience.

In addition, to ensure that an audio playing effect in the second preset area (that is, the audio playing area) remains unchanged, a filter parameter (that is, the foregoing preset amplitude adjustment and phase adjustment parameter) corresponding to the array element 1 may be determined based on the transfer functions respectively corresponding to the plurality of second sampling points.

For example, the plurality of second sampling points include four points e, f, g, and h, and the transfer functions respectively corresponding to the second sampling points are $H_e'\{H_e'^1, H_e'^2, H_e'^3\}$, $H_f'\{H_f'^1, H_f'^2, H_f'^3\}$, $H_g'\{H_g'^1, H_g'^2, H_g'^3\}$, and $H_h'\{H_h'^1, H_h'^2, H_h'^3\}$. A filter parameter w1 corresponding to the array element 1 may be determined based on Formula 2.

$$\text{w1}H_i'^1 + H_i'^2 + H_i'^3 \approx H \quad (\text{Formula 2})$$

H is a frequency sweep signal, and i may be e, f, g, and h separately. w1 may be comprehensively calculated by separately substituting the transfer functions into Formula 2. Because a plurality of second collection points in the second preset area are considered when w1 is calculated, it can be ensured that when any audio signal is processed based on w1, interference caused by a sound wave output by the second-type array element on a sound wave output by the first-type array element can be cancelled at a plurality of location points in the second preset area (the audio playing area), so that an audio reception effect in the audio playing area remains unchanged, thereby improving user experience.

After w1 corresponding to the array element 1, w2 corresponding to the array element 2, and w3 corresponding to the array element 3 are determined, these filter parameters may be pre-stored locally in the electronic device 100. After the electronic device 100 enables a quiet mode, the pre-stored filter parameters may be invoked to process the initial audio signal received by the electronic device 100, to implement a quiet call and improve user experience.

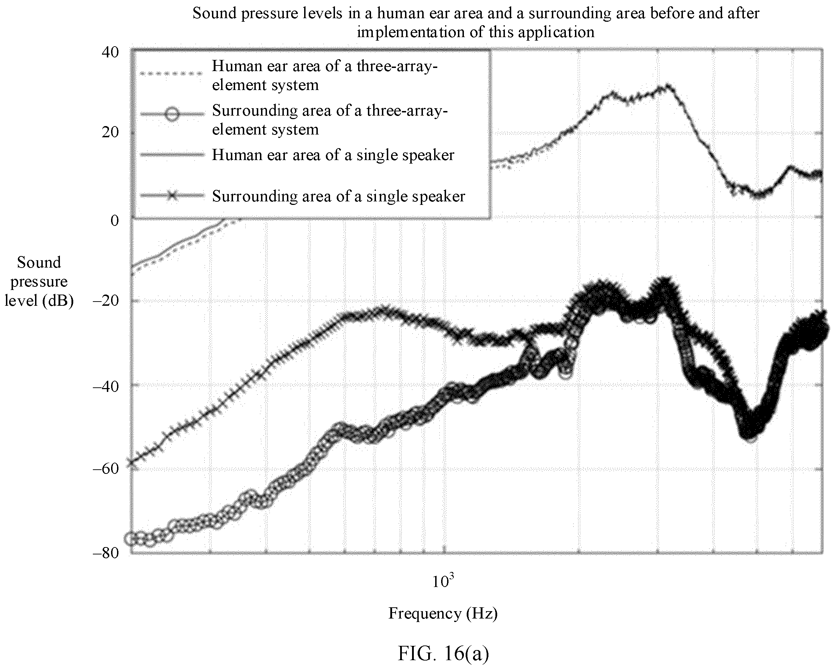

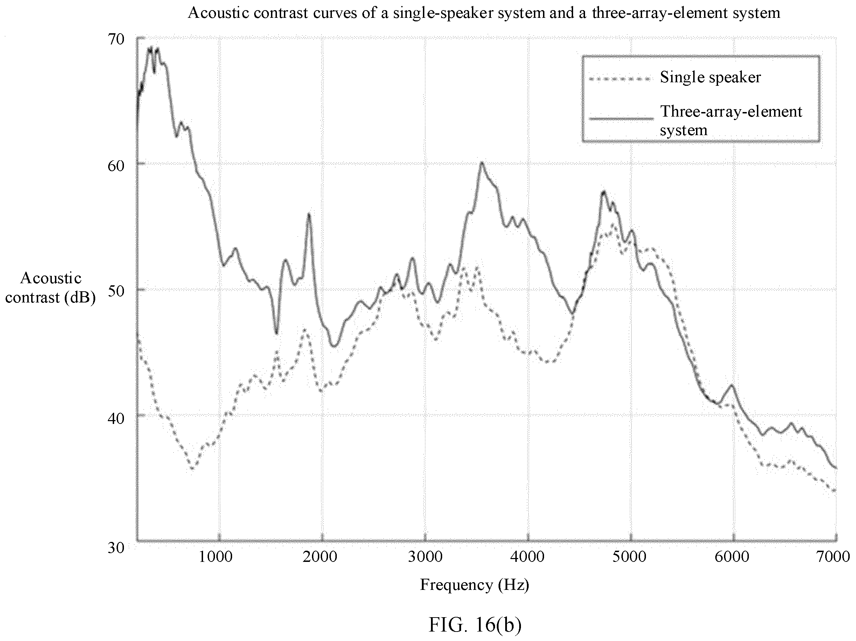

For example, as shown in FIG. 16(a) and FIG. 16(b), FIG. 16(a) and FIG. 16(b) are a diagram of frequency response curves in a human ear area and a surrounding area according to an embodiment of this application. A frequency response curve (a solid line with o) in the surrounding area in FIG. 16(a) is lower than a frequency response curve (a solid line with x) in the surrounding area before implementation of this application, and frequency response curves in the human ear area are basically consistent (a solid line and a dashed line). This indicates that the technical solutions provided in this application can reduce, as much as possible, sound leakage from a mobile phone to a surrounding area without changing a sense of hearing of the user. FIG. 16(b) shows an acoustic contrast (Acoustic Contrast, AC) curve. An acoustic contrast is an average sound pressure level in an intra-ear area minus an average sound pressure level in a surrounding area. A lower acoustic contrast indicates a severer sound leakage problem. FIG. 16(b) shows that the acoustic contrast increases significantly after the solution of this application is implemented, indicating that volume of a leaked sound is significantly reduced.

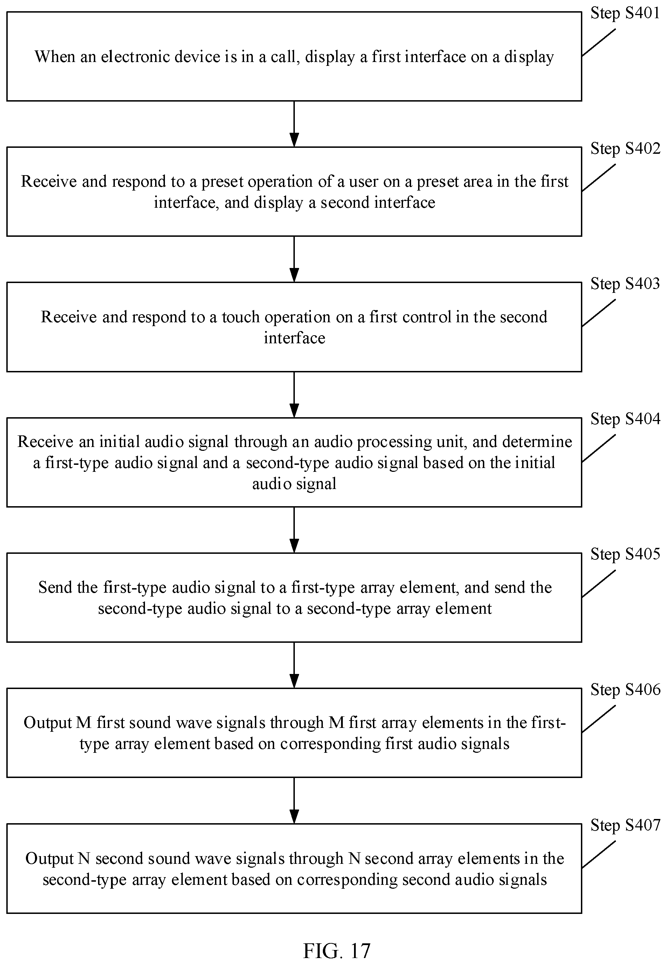

Refer to FIG. 17. An embodiment of this application provides a sound leakage prevention method, applied to an electronic device. The electronic device includes a display, an audio processing unit, a first-type array element, and a second-type array element. The first-type array element includes M first array elements, the second-type array element includes N second array elements, and M and N are integers greater than 0.

Step S401: When the electronic device is in a call, display a first interface on the display.

Specifically, the first interface may be the user interface 22 in FIG. 3b(a). For detailed descriptions, refer to the foregoing related descriptions of the user interface 22. Details are not described herein again.

Step S402: Receive and respond to a preset operation of a user on a preset area in the first interface, and display a second interface.

Specifically, the preset area may be the area 204 in the user interface 22. The preset operation may be a downward slide operation in the preset area. The second interface may be the user interface 23 in FIG. 3b(b). For detailed descriptions, refer to the foregoing related descriptions of the user interface 23. Details are not described herein again.

Step S403: Receive and respond to a touch operation on a first control in the second interface.

Specifically, the first control may be the control 205 in the user interface 23.

Step S404: Receive an initial audio signal through the audio processing unit, and determine a first-type audio signal and a second-type audio signal based on the initial audio signal.

The first-type audio signal includes M first audio signals, and the second-type audio signal includes N second audio signals.

Step S405: Send the first-type audio signal to the first-type array element, and send the second-type audio signal to the second-type array element.

One audio signal corresponds to one array element.

Step S406: Output M first sound wave signals through the M first array elements in the first-type array element based on the corresponding first audio signals.

Step S407: Output N second sound wave signals through the N second array elements in the second-type array element based on the corresponding second audio signals.

Specifically, the N second sound wave signals are used for superimposition and cancellation with the M first sound wave signals at a plurality of location points in a first preset area.

In this application, a plurality of array elements may be configured on the electronic device, and the plurality of array elements may include the first-type array element and the second-type array element. In a call process, the audio processing unit may process the to-be-played initial audio signal to obtain the M first audio signals and the N second audio signals, respectively send the M first audio signals to the corresponding first array elements, and respectively send the N second audio signals to the corresponding second array elements. Further, the first array elements and the second array elements may simultaneously output different sound wave signals based on the received audio signals, so that the N second sound wave signals output by the N second-type array elements are superimposed and cancelled with a leaked sound of the first-type array elements at a plurality of location points in a sound leakage prevention area (that is, a surrounding area of the electronic device). In this way, an audio leakage effect in the sound leakage prevention area is reduced, thereby implementing a private call, and improving user experience.

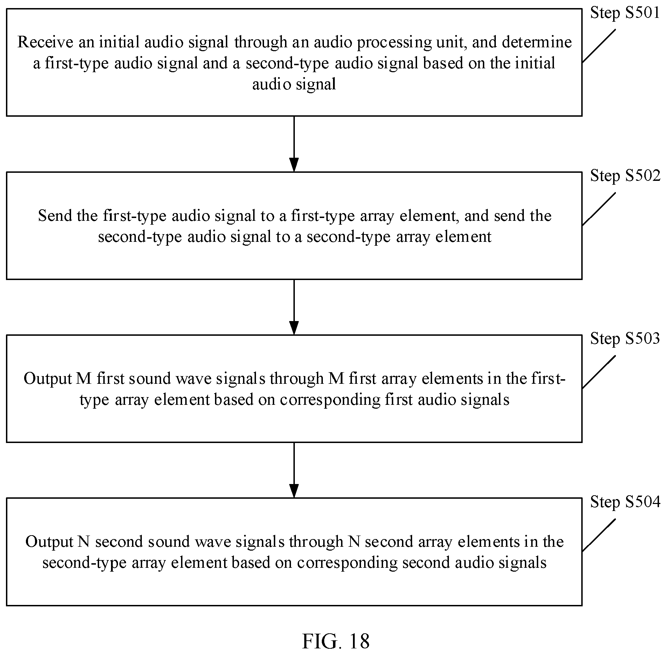

Refer to FIG. 18. An embodiment of this application provides a sound leakage prevention method, applied to an electronic device. The electronic device includes an audio processing unit, a first-type array element, and a second-type array element. The first-type array element includes M first array elements, the second-type array element includes N second array elements, and M and N are integers greater than 0.

Step S501: Receive an initial audio signal through the audio processing unit, and determine a first-type audio signal and a second-type audio signal based on the initial audio signal.

The first-type audio signal includes M first audio signals, and the second-type audio signal includes N second audio signals.

Step S502: Send the first-type audio signal to the first-type array element, and send the second-type audio signal to the second-type array element.

Specifically, one audio signal corresponds to one array element.

Step S503: Output M first sound wave signals through the M first array elements in the first-type array element based on the corresponding first audio signals.

Step S504: Output N second sound wave signals through the N second array elements in the second-type array element based on the corresponding second audio signals.

Specifically, the N second sound wave signals are used for superimposition and cancellation with the M first sound wave signals at a plurality of location points in a first preset area.

In some embodiments, the electronic device further includes M first filters, and the method further includes: performing first filtering processing on the initial audio signal by using each first filter to obtain the M first audio signals, where the M first audio signals are used to cancel, at a plurality of location points in a second preset area, interference of the N second sound wave signals on the M first sound wave signals, the first filtering processing includes performing amplitude adjustment processing and/or phase adjustment processing on the initial audio signal, and an audio reception effect of a processed initial audio signal in the second preset area remains unchanged.

In some embodiments, the first preset area is a sound leakage prevention area, the second preset area is an audio playing area, and the first preset area is larger than the second preset area.

In some embodiments, the electronic device further includes N second filters, and the method further includes: performing second filtering processing on the initial audio signal by using each second filter to obtain the N second audio signals, where the second filtering processing includes performing amplitude adjustment processing and/or phase adjustment processing on the initial audio signal, and an audio leakage effect of a processed initial audio signal in the first preset area is reduced.

In some embodiments, the electronic device includes Q array elements, Q is greater than or equal to M+N, and the method further includes: obtaining decision information, where the decision information includes one or more of a current quantity of persons in the first preset area, a current remaining battery level of the electronic device, or a current location of the electronic device; and determining the M first array elements in the first-type array element and the N second array elements in the second-type array element from the Q array elements based on the decision information.

In some embodiments, if the current quantity of persons in the first preset area is larger, a value of N is larger; or if the current remaining battery level of the electronic device is lower, a value of N is smaller; or if the current location of the electronic device is in a private area, a value of N is smaller.

In some embodiments, the electronic device further includes M+N power amplifier circuits, one power amplifier circuit corresponds to one audio signal, and the method further includes: respectively amplifying the M first audio signals and the N second audio signals by using the M+N power amplifier circuits, to obtain M processed first audio signals and N processed second audio signals; the M first array elements in the first-type array element are specifically configured to output the M first sound wave signals based on the processed first-type audio signals; and the second-type array element is specifically configured to output the N second sound wave signals based on the processed second-type audio signals.

In conclusion, in this application, a plurality of array elements may be configured on the electronic device, and the plurality of array elements may include the first-type array element and the second-type array element. In a call process, the audio processing unit may process the to-be-played initial audio signal to obtain the M first audio signals and the N second audio signals, respectively send the M first audio signals to the corresponding first array elements, and respectively send the N second audio signals to the corresponding second array elements. Further, the first array elements and the second array elements may simultaneously output different sound wave signals based on the received audio signals, so that the N second sound wave signals output by the N second-type array elements are superimposed and cancelled with a leaked sound of the first-type array elements at a plurality of location points in a sound leakage prevention area (that is, a surrounding area of the electronic device). In this way, an audio leakage effect in the sound leakage prevention area is reduced, thereby implementing a private call, and improving user experience.

This application provides a computer storage medium. The computer storage medium stores a computer program, and when the computer program is executed by a processor, any one of the foregoing sound leakage prevention methods is implemented.

An embodiment of this application provides an electronic device. The electronic device includes a processor, and the processor is configured to support the electronic device in implementing a corresponding function in any one of the foregoing sound leakage prevention methods. The electronic device may further include a memory. The memory is configured to be coupled to the processor, and the memory stores program instructions and data that are necessary for the electronic device. The electronic device may further include a communication interface, used for communication between the electronic device and another device or a communication network.

This application provides a chip system. The chip system includes a processor, configured to support an electronic device in implementing the foregoing function, for example, generating or processing information in the foregoing sound leakage prevention method. In a possible design, the chip system further includes a memory, and the memory is configured to store program instructions and data that are necessary for the electronic device. The chip system may include a chip, or may include a chip and another discrete component.

This application provides a computer program. The computer program includes instructions, and when the computer program is executed by a computer, the computer is enabled to perform the foregoing sound leakage prevention method.

In the foregoing embodiments, descriptions of the embodiments have respective focuses. For a part that is not described in detail in an embodiment, refer to related descriptions in other embodiments.

It should be noted that, for brief description, the foregoing method embodiments are expressed as a series of action combinations. However, a person skilled in the art should appreciate that this application is not limited to the described order of the actions, because according to this application, some steps may be performed in other orders or simultaneously. In addition, a person skilled in the art should also appreciate that all embodiments described in the specification are preferred embodiments, and the related actions and modules are not necessarily mandatory to this application.

In the several embodiments provided in this application, it should be understood that the disclosed apparatus may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device, and may be specifically a processor in a computer device) to perform all or some of the steps of the foregoing methods described in embodiments of this application. The foregoing storage medium may include any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the spirit and scope of the technical solutions in embodiments of this application.

## Claims

1. An electronic device, wherein the electronic device comprises an audio processing unit, a first-type array element, and a second-type array element, the first-type array element comprises M first array elements, the second-type array element comprises N second array elements, and M and N are integers greater than 0;

   the audio processing unit is configured to:

   receive an initial audio signal, and determine a first-type audio signal and a second-type audio signal based on the initial audio signal, wherein the first-type audio signal comprises M first audio signals, and the second-type audio signal comprises N second audio signals; and
   send the first-type audio signal to the first-type array element, and send the second-type audio signal to the second-type array element, wherein one audio signal corresponds to one array element;
   the M first array elements in the first-type array element are configured to:

   output M first sound wave signals based on the corresponding first audio signals; and
   the N second array elements in the second-type array element are configured to:
   output N second sound wave signals based on the corresponding second audio signals, wherein the N second sound wave signals are used for superimposition and cancellation with the M first sound wave signals at a plurality of location points in a first preset area.

2. The device according to claim 1, wherein the electronic device further comprises M first filters, and the audio processing unit is further configured to:
   perform first filtering processing on the initial audio signal by using each first filter to obtain the M first audio signals, wherein the M first audio signals are used to cancel, at a plurality of location points in a second preset area, interference of the N second sound wave signals on the M first sound wave signals, and the first filtering processing comprises performing amplitude adjustment processing and/or phase adjustment processing on the initial audio signal.

3. The device according to claim 2, wherein the first preset area is a sound leakage prevention area, and the second preset area is an audio playing area.

4. The device according to any one of claims 1 to 3, wherein the electronic device further comprises N second filters, and the audio processing unit is further configured to:
   perform second filtering processing on the initial audio signal by using each second filter to obtain the N second audio signals, wherein the second filtering processing comprises performing amplitude adjustment processing and/or phase adjustment processing on the initial audio signal.

5. The device according to any one of claims 1 to 4, wherein the electronic device comprises Q array elements, Q is greater than or equal to M+N, and the audio processing unit is further configured to:

   obtain decision information, wherein the decision information comprises one or more of a current quantity of persons in the first preset area, a current remaining battery level of the electronic device, or a current location of the electronic device; and

determine the M first array elements in the first-type array element and the N second array elements in the second-type array element from the Q array elements based on the decision information.

6. The device according to claim 5, wherein if the current quantity of persons in the first preset area is larger, a value of N is larger; or if the current remaining battery level of the electronic device is lower, a value of N is smaller; or if the current location of the electronic device is in a private area, a value of N is smaller.

7. The device according to claim 5 or 6, wherein distances between the N second array elements in the second-type array element and the M first array elements in the first-type array element fall within a first range.

8. The device according to any one of claims 1 to 7, wherein the electronic device further comprises M+N power amplifier circuits, one power amplifier circuit corresponds to one audio signal, and the audio processing unit is further configured to:

respectively amplify the M first audio signals and the N second audio signals by using the M+N power amplifier circuits, to obtain M processed first audio signals and N processed second audio signals;
the M first array elements in the first-type array element are specifically configured to output the M first sound wave signals based on the processed first-type audio signals; and
the second-type array element is specifically configured to output the N second sound wave signals based on the processed second-type audio signals.

9. A sound leakage prevention method, applied to an electronic device, wherein the electronic device comprises a display, an audio processing unit, a first-type array element, and a second-type array element, the first-type array element comprises M first array elements, the second-type array element comprises N second array elements, and M and N are integers greater than 0; and the method comprises:

when the electronic device is in a call, displaying a first interface on the display; receiving and responding to a preset operation of a user on a preset area in the first interface, and displaying a second interface; and receiving and responding to a touch operation on a first control in the second interface;
receiving an initial audio signal through the audio processing unit, and determining a first-type audio signal and a second-type audio signal based on the initial audio signal, wherein the first-type audio signal comprises M first audio signals, and the second-type audio signal comprises N second audio signals; and sending the first-type audio signal to the first-type array element, and sending the second-type audio signal to the second-type array element, wherein one audio signal corresponds to one array element;
outputting M first sound wave signals through the M first array elements in the first-type array element based on the corresponding first audio signals; and
outputting N second sound wave signals through the N second array elements in the second-type array element based on the corresponding second audio signals, wherein the N second sound wave signals are used for superimposition and cancellation with the M first sound wave signals at a plurality of location points in a first preset area.

10. A sound leakage prevention method, applied to an electronic device, wherein the electronic device comprises an audio processing unit, a first-type array element, and a second-type array element, the first-type array element comprises M first array elements, the second-type array element comprises N second array elements, and M and N are integers greater than 0; and the method comprises:

receiving an initial audio signal through the audio processing unit, and determining a first-type audio signal and a second-type audio signal based on the initial audio signal, wherein the first-type audio signal comprises M first audio signals, and the second-type audio signal comprises N second audio signals; and sending the first-type audio signal to the first-type array element, and sending the second-type audio signal to the second-type array element, wherein one audio signal corresponds to one array element;
outputting M first sound wave signals through the M first array elements in the first-type array element based on the corresponding first audio signals; and
outputting N second sound wave signals through the N second array elements in the second-type array element based on the corresponding second audio signals, wherein the N second sound wave signals are used for superimposition and cancellation with the M first sound wave signals at a plurality of location points in a first preset area.

11. The method according to claim 10, wherein the electronic device further comprises M first filters, and the method further comprises:
performing first filtering processing on the initial audio signal by using each first filter to obtain the M first audio signals, wherein the M first audio signals are used to cancel, at a plurality of location points in a second preset area, interference of the N second sound wave signals on the M first sound wave signals, the first filtering processing comprises performing amplitude adjustment processing and/or phase adjustment processing on the initial audio signal, and an audio reception effect of a processed initial audio signal in the second preset area remains unchanged.

12. The method according to claim 11, wherein the first preset area is a sound leakage prevention area, the second preset area is an audio playing area, and the first preset area is larger than the second preset area.

13. The method according to any one of claims 10 to 12, wherein the electronic device further comprises N second filters, and the method further comprises:
performing second filtering processing on the initial audio signal by using each second filter to obtain the N second audio signals, wherein the second filtering processing comprises performing amplitude adjustment processing and/or phase adjustment processing on the initial audio signal, and an audio leakage effect of a processed initial audio signal in the first preset area is reduced.

14. The method according to any one of claims 10 to 13, wherein the electronic device comprises Q array elements, Q is greater than or equal to M+N, and the method further comprises:

obtaining decision information, wherein the decision information comprises one or more of a current quantity of persons in the first preset area, a current remaining battery level of the electronic device, or a current location of the electronic device; and
determining the M first array elements in the first-type array element and the N second array elements in the second-type array element from the Q array elements based on the decision information.

15. The method according to claim 14, wherein if the current quantity of persons in the first preset area is larger, a value of N is larger; or if the current remaining battery level of the electronic device is lower, a value of N is smaller; or if the current location of the electronic device is in a private area, a value of N is smaller.

16. The method according to claim 14 or 15, wherein distances between the N second array elements in the second-type array element and the M first array elements in the first-type array element fall within a first range.

17. The method according to any one of claims 10 to 16, wherein the electronic device further comprises M+N power amplifier circuits, one power amplifier circuit corresponds to one audio signal, and the method further comprises:

respectively amplifying the M first audio signals and the N second audio signals by using the M+N power amplifier circuits, to obtain M processed first audio signals and N processed second audio signals;
the M first array elements in the first-type array element are specifically configured to output the M first sound wave signals based on the processed first-type audio signals; and
the second-type array element is specifically configured to output the N second sound wave signals based on the processed second-type audio signals.

18. An electronic device, comprising a memory and one or more processors, wherein the memory is coupled to the one or more processors, the memory is configured to store computer program code, the computer program code comprises computer instructions, and the one or more processors invoke the computer instructions, so that the electronic device performs the method according to any one of claims 10 to 17.

19. A chip system, wherein the chip system comprises at least one processor, a memory, and an interface circuit, the memory, the interface circuit, and the at least one processor are interconnected through a line, the at least one memory stores instructions, and when the instructions are executed by the processor, the method according to any one of claims 10 to 17 is implemented.

20. A computer-readable storage medium, comprising instructions, wherein when the instructions are run on an electronic device, the electronic device is enabled to perform the method according to any one of claims 10 to 17.

21. A computer program product, wherein the computer program product comprises computer instructions, and when the computer instructions are run on an electronic device, the electronic device is enabled to perform the method according to any one of claims 10 to 17.

Electronic device 100

FIG. 1

| Application layer | Camera | Calendar | Map | WLAN | Music | Messages |
|---|---|---|---|---|---|---|
| | Gallery | Phone | Navigation | Bluetooth | Video | ... |

| Application framework layer | Window manager | Content provider | Phone manager | Resource manager |
|---|---|---|---|---|
| | Notification manager | View system | Event manager | ... |

| System library | Surface manager | Three-dimensional graphics processing library | Android runtime |
|---|---|---|---|
| | Two-dimensional graphics engine | Media library | ... | |

| Kernel layer | Display driver | Camera driver | |
|---|---|---|---|
| | Audio driver | Sensor driver | ... |

FIG. 2

FIG. 3a(a)

User interface 21

XXX-XXXXXXXX

| 1 | 2 | 3 |
| 4 | 5 | 6 |
| 7 | 8 | 9 |

Area 202

Control 203

FIG. 3a(b)

Area 204

User interface 22

XXXXXXXXXXX | XX XX    Op

00:09

Record

Add call

Video

Mute

Contacts

FIG. 3b(a)

Control center

Call mode

Quiet mode ———————————— Control 205

Not played                    WLAN ▼

◄    ►    ►|

Bluetooth ▼

Mobile data    Mute    Auto rotate

User interface 23

FIG. 3b(b)

**Quiet call ongoing**

XXXXXXXXXX | XX XX    Operator

00:09

Record

Add call

User interface 22

Video

Mute

Contacts

FIG. 3c

FIG. 3d

User interface 25

FIG. 3e

Array element 2    Array element 1

Electronic device 100

Audio processing unit

Array element 3

FIG. 4

FIG. 5

FIG. 6

FIG. 7

FIG. 8

FIG. 9

EP 4 625 953 A1

First-type array element

First audio
signal

First filter 1 → First audio signal → First array element 1 → First sound wave signal

Initial
audio signal

Initial
audio
signal → Audio processing unit

Second audio signal → Second array element 1 → Second sound wave signal

...

Second audio signal → Second array element N → Second sound wave signal

Second-type array element

FIG. 10

EP 4 625 953 A1

FIG. 11

EP 4 625 953 A1

Second-
type array
element

First-type
array
element

Array
element 2

Array
element 1

Array
element 3

Second-type
array element

A leaked sound is heard when only
the array element 1 emits a sound

After sound wave
superimposition, sound
pressure of the leaked sound is
reduced, and the leaked sound
cannot be heard clearly

FIG. 12

EP 4 625 953 A1

First-type array element

| | First audio signal | | Processed first audio signal | | First sound wave signal |

First filter 1 → First audio signal → Power amplifier circuit 1 → Processed first audio signal → First array element 1 → First sound wave signal

Initial audio signal →

Initial audio signal → Audio processing unit

Initial audio signal → First filter 1

Initial audio signal → Second filter 1 → Second audio signal → Power amplifier circuit 2 → Processed second audio signal → Second array element 1 → Second sound wave signal

...

Initial audio signal → Second filter 2 → Second audio signal → Power amplifier circuit 3 → Processed second audio signal → Second array element N → Second sound wave signal

Second-type array element

FIG. 13

Collect a transfer function from each array element to each area Step S301

Determine, based on a preset algorithm, a filter corresponding to each array element Step S302

FIG. 14

FIG. 15

Sound pressure levels in a human ear area and a surrounding area before and after
implementation of this application

FIG. 16(a)

Acoustic contrast curves of a single-speaker system and a three-array-element system

FIG. 16(b)

EP 4 625 953 A1

When an electronic device is in a call, display a first interface on a display — Step S401

Receive and respond to a preset operation of a user on a preset area in the first interface, and display a second interface — Step S402

Receive and respond to a touch operation on a first control in the second interface — Step S403

Receive an initial audio signal through an audio processing unit, and determine a first-type audio signal and a second-type audio signal based on the initial audio signal — Step S404

Send the first-type audio signal to a first-type array element, and send the second-type audio signal to a second-type array element — Step S405

Output M first sound wave signals through M first array elements in the first-type array element based on corresponding first audio signals — Step S406

Output N second sound wave signals through N second array elements in the second-type array element based on corresponding second audio signals — Step S407

FIG. 17

Step S501

Receive an initial audio signal through an audio processing unit, and determine a first-type audio signal and a second-type audio signal based on the initial audio signal

Step S502

Send the first-type audio signal to a first-type array element, and send the second-type audio signal to a second-type array element

Step S503

Output M first sound wave signals through M first array elements in the first-type array element based on corresponding first audio signals

Step S504

Output N second sound wave signals through N second array elements in the second-type array element based on corresponding second audio signals

FIG. 18

## INTERNATIONAL SEARCH REPORT

| | International application No. |
| --- | --- |
| | **PCT/CN2024/112405** |

**A.    CLASSIFICATION OF SUBJECT MATTER**

H04M1/19(2006.01)i

According to International Patent Classification (IPC) or to both national classification and IPC

**B.    FIELDS SEARCHED**

Minimum documentation searched (classification system followed by classification symbols)

IPC: H04M, G10K

Documentation searched other than minimum documentation to the extent that such documents are included in the fields searched

Electronic data base consulted during the international search (name of data base and, where practicable, search terms used)

CNTXT, CNKI, ENTXTC, WPABSC, DWPI: 华为, 荣耀, 音频, 声音, 声波, 滤波, 通话, 语音, 手机, 漏音, 消音, 抵消, 泄露, 叠加, 发声, 扬声, 阵元, 阵列, 相反, 相位, 位置, 区域, 多个, 第一, 第二, audio, sound, speak, wave, filter, call, voice, cell phone, leakage, muffle, cancel, leak, superposition, element, array, opposite, phase, location, zone, plurality, first, second

**C.    DOCUMENTS CONSIDERED TO BE RELEVANT**

| Category* | Citation of document, with indication, where appropriate, of the relevant passages | Relevant to claim No. |
| --- | --- | --- |
| X | CN 112118339 A (HUAWEI TECHNOLOGIES CO., LTD.) 22 December 2020 (2020-12-22) description, paragraphs [0003]-[0281], and figures 1-26 | 1-21 |
| X | CN 113746975 A (HUAWEI TECHNOLOGIES CO., LTD.) 03 December 2021 (2021-12-03) description, paragraphs [0004]-[0158], and figures 1-12 | 1-21 |
| X | CN 116405589 A (HONOR DEVICE CO., LTD.) 07 July 2023 (2023-07-07) description, paragraphs [0005]-[0199], and figures 1-9 | 1-21 |
| X | CN 113497849 A (HUAWEI TECHNOLOGIES CO., LTD.) 12 October 2021 (2021-10-12) description, paragraphs [0005]-[0259], and figures 1-17 | 1-21 |
| X | CN 116320133 A (GUANGDONG OPPO MOBILE TELECOMMUNICATIONS CORP., LTD.) 23 June 2023 (2023-06-23) description, paragraphs [0004]-[0371], and figures 1-16 | 1-21 |
| X | CN 116346977 A (GUANGDONG OPPO MOBILE TELECOMMUNICATIONS CORP., LTD.) 27 June 2023 (2023-06-27) description, paragraphs [0004]-[0182], and figures 1-8 | 1-21 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 October 2024** | **31 October 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/112405** |

### C. DOCUMENTS CONSIDERED TO BE RELEVANT

| Category* | Citation of document, with indication, where appropriate, of the relevant passages | Relevant to claim No. |
| --- | --- | --- |
| A | CN 107210032 A (FRAUNHOFER-GESELLSCHAFT) 26 September 2017 (2017-09-26) entire document | 1-21 |
| A | US 2016196818 A1 (HARMAN BECKER AUTOMOTIVE SYSTEMS G.M.B.H.) 07 July 2016 (2016-07-07) entire document | 1-21 |

Form PCT/ISA/210 (second sheet) (July 2022)

## INTERNATIONAL SEARCH REPORT
### Information on patent family members

International application No.

**PCT/CN2024/112405**

| Patent document cited in search report | | | Publication date (day/month/year) | Patent family member(s) | | | Publication date (day/month/year) |
|---|---|---|---|---|---|---|---|
| CN | 112118339 | A | 22 December 2020 | None | | | |
| CN | 113746975 | A | 03 December 2021 | None | | | |
| CN | 116405589 | A | 07 July 2023 | None | | | |
| CN | 113497849 | A | 12 October 2021 | None | | | |
| CN | 116320133 | A | 23 June 2023 | None | | | |
| CN | 116346977 | A | 27 June 2023 | None | | | |
| CN | 107210032 | A | 26 September 2017 | CA | 2974223 | A1 | 28 July 2016 |
| | | | | CA | 2974223 | C | 22 September 2020 |
| | | | | EP | 3248186 | A1 | 29 November 2017 |
| | | | | EP | 3248186 | B1 | 16 March 2022 |
| | | | | AU | 2021200589 | A1 | 04 March 2021 |
| | | | | AU | 2021200589 | B2 | 08 September 2022 |
| | | | | ES | 2913870 | T3 | 06 June 2022 |
| | | | | US | 2017316773 | A1 | 02 November 2017 |
| | | | | US | 10395634 | B2 | 27 August 2019 |
| | | | | EP | 3048608 | A1 | 27 July 2016 |
| | | | | MX | 2017009378 | A | 15 November 2017 |
| | | | | RU | 2666675 | C1 | 11 September 2018 |
| | | | | WO | 2016116330 | A1 | 28 July 2016 |
| | | | | AU | 2019201415 | A1 | 21 March 2019 |
| | | | | AU | 2016208741 | A1 | 03 August 2017 |
| | | | | PL | 3248186 | T3 | 18 July 2022 |
| | | | | KR | 20170106430 | A | 20 September 2017 |
| | | | | KR | 102038528 | B1 | 30 October 2019 |
| | | | | JP | 2018506080 | A | 01 March 2018 |
| | | | | JP | 6851980 | B2 | 31 March 2021 |
| | | | | BR | 112017015388 | A2 | 16 January 2018 |
| | | | | BR | 112017015388 | B1 | 30 August 2022 |
| US | 2016196818 | A1 | 07 July 2016 | JP | 2016126335 | A | 11 July 2016 |
| | | | | EP | 3040984 | A1 | 06 July 2016 |
| | | | | EP | 3040984 | B1 | 13 July 2022 |
| | | | | US | 9711131 | B2 | 18 July 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202311050596